# NEUE EUROPÄISCHE PATENTSCHRIFT

(11) **EP 3 140 129 B2**
(45) Veröffentlichungstag und Bekanntmachung des Hinweises auf die Entscheidung über den Einspruch: **22.06.2022**
(45) Hinweis auf die Patenterteilung: 04.07.2018
(21) Anmeldenummer: 15718891.3
(22) Anmeldetag: 28.04.2015
(51) Int. Cl.: B44C 5/04, E04F 15/00, B29C 43/28, B29L 31/00, B27N 3/24, B27N 7/00, B30B 5/06, B32B 37/20, E04F 13/00, E04F 15/10, B29C 43/48, B29C 43/22

(54) **VERFAHREN ZUR HERSTELLUNG EINES DEKORIERTEN WAND- ODER BODENPANEELS**
METHOD FOR PRODUCING A DECORATED WALL OR FLOOR PANEL
PROCÉDÉ DE FABRICATION D'UN PANNEAU MURAL OU DE SOL DÉCORÉ

(30) Priorität: 09.05.2014 EP 14167698
(43) Veröffentlichungstag der Anmeldung: 15.03.2017
(60) Teilanmeldung: 18173627.3
(73) Patentinhaber: Akzenta Paneele + Profile GmbH, 56759 Kaisersesch (DE)
(72) Erfinder: HANNIG, Hans-Jürgen, 51427 Bergisch Gladbach (DE)
(74) Vertreter: Michalski Hüttermann & Partner Patentanwälte mbB
(86) Internationale Anmeldenummer: PCT/EP2015/059220
(87) Internationale Veröffentlichungsnummer: WO 2015/169647

(56) Entgegenhaltungen:
- WO-A1-02/094523
- WO-A1-2007/061193
- WO-A1-2012/016916
- WO-A2-2009/065769
- WO-A2-2009/065769
- DE-A1- 2 600 144
- DE-A1- 19 751 516
- DE-A1-102007 063 261
- US-A1- 2009 202 810
- US-A1- 2009 202 810

## Beschreibung

Die vorliegende Erfindung betrifft ein Verfahren zum Herstellen eines dekorierten Wand- oder Bodenpaneels sowie ein gemäß einem solchen Verfahren hergestelltes Wand- oder Bodenpaneel.

Dekorierte Platten sind an sich bekannt, wobei unter dem Begriff Wandpaneel auch Paneele zu verstehen sind, die zur Deckenbekleidung geeignet sind. Sie bestehen üblicherweise aus einem Träger beziehungsweise Kern aus einem festen Material, beispielsweise einem Holzwerkstoff, der auf mindestens einer Seite mit einer Dekorschicht und einer Deckschicht sowie gegebenenfalls mit weiteren Schichten, beispielsweise einer zwischen Dekor- und Deckschicht angeordneten Verschleißschicht, versehen ist. Die Dekorschicht ist üblicherweise ein gedrucktes Papier, das mit einem Harz imprägniert ist. Auch die Deckschicht und die übrigen Schichten werden meist aus Harz hergestellt.

Das Dokument US 2009/0202810 A1 beschreibt ein Verfahren zum Herstellen eines länglichen Paneels. Bei einem derartigen Verfahren wird eine härtbare Mischung als Ausgangsmischung vorgesehen, welche ein Polymersystem, Mikrogugeln und faserartiges Verstärkungsmaterial aufweist. Die härtbare Mischung wird auf einem Transportband angeordnet und abgeflacht. Die Mischung wird dann in einer Presse komprimiert und teilweise gehärtet. Eine vollständige Härtung erfolgt, nachdem eine Struktur in das Paneel eingepresst wurde.

Die Herstellung der Paneele wie beispielsweise des Kerns beziehungsweise des Trägers kann dabei unter Umständen noch Verbesserungspotential bieten.

Es ist daher die Aufgabe der vorliegenden Erfindung, ein verbessertes Verfahren zur Herstellung von dekorierten Wand- oder Bodenpaneelen bereitzustellen.

Gelöst wird diese Aufgabe durch ein Verfahren gemäß Anspruch 1.

Die vorliegende Erfindung wird durch den Gegenstand des Anspruchs 1 definiert.

Mit der Erfindung wird somit ein Verfahren zur Herstellung eines dekorierten Wand- oder Bodenpaneels vorgeschlagen, aufweisend die Verfahrensschritte:
a) Bereitstellen eines schüttfähigen Trägermaterials, insbesondere eines Granulats,
b) Anordnen des Trägermaterials zwischen zwei bandartigen Fördermitteln,
c) Formen des Trägermaterials unter Einwirkung von Temperatur unter Ausbildung eines bahnförmigen Trägers,
d) Komprimieren des Trägers,
e) Behandeln des Trägers unter Einwirkung von Druck unter Verwendung einer Zweibandpresse, wobei der Träger in oder vor der Zweibandpresse auf eine Temperatur unterhalb der Schmelz- beziehungsweise Erweichungstemperatur des Trägermaterials gekühlt wird,
f) gegebenenfalls weiteres Abkühlen des Trägers,
g) gegebenenfalls Aufbringen eines Dekoruntergrunds auf zumindest einen Teilbereich des Trägers;
h) Aufbringen eines eine Dekorvorlage nachbildenden Dekors auf zumindest einen Teilbereich des Trägers,
i) Aufbringen einer Schutzschicht auf zumindest einen Teilbereich des Dekors,
j) gegebenenfalls Strukturieren der Schutzschicht zum Einfügen von Poren und/oder des Randbereichs des Trägers zum Ausbilden von Verbindungselementen, und
k) gegebenenfalls Behandeln des Trägers zur elektrostatischen Entladung vor einem der vorgenannten Verfahrensschritte.

Unter dem Begriff "dekoriertes Wand- oder Bodenpaneel" beziehungsweise "Dekorpaneel" sind im Sinne der Erfindung insbesondere Wand-, Decken, oder Bodenpannele zu verstehen, welche ein auf eine Trägerplatte aufgebrachtes eine Dekorvorlage nachbildendes Dekor aufweisen. Dekorpaneele werden dabei in vielfältiger Weise sowohl im Bereich des Innenausbaus von Räumen, als auch zur dekorativen Verkleidung von Bauten, beispielsweise im Messebau, verwendet. Eine der häufigsten Einsatzbereiche von Dekorpaneelen ist deren Nutzung als Fußbodenbelag. Die Dekorpaneele weisen dabei vielfach ein Dekor auf, welches einen Naturwerkstoff nachempfinden soll.

Beispiele für solche nachempfundenen Naturwerkstoffe beziehungsweise Dekorvorlagen sind Holzarten wie beispielsweise Ahorn, Eiche, Birke, Kirsche, Esche, Nussbaum, Kastanie, Wenge oder auch exotische Hölzer wie Panga-Panga, Mahagoni, Bambus und Bubinga. Darüber hinaus werden vielfach Naturwerkstoffe wir Steinoberflächen oder Keramikoberflächen nachempfunden.

Entsprechend kann unter einer "Dekorvorlage" im Sinne der vorliegenden insbesondere verstanden werden ein derartiger originaler Naturwerkstoff beziehungsweise zumindest eine Oberfläche eines solchen, der durch das Dekor imitiert beziehungsweise nachempfunden werden soll.

Unter einem "schüttfähigen" Material kann insbesondere ein Material verstanden werden, welches durch einen Schüttvorgang beziehungsweise Streuvorgang auf eine Unterlage aufgebracht werden kann. Dabei kann das Material als Fluid vorliegen oder insbesondere als schüttfähiger Feststoff.

Ferner kann unter einem "Granulat" beziehungsweise einem "granularen Material" ein Feststoff beziehungsweise ein Haufwerk eines Feststoffs verstanden werden, welcher eine Vielzahl fester Partikel, wie etwa Körner oder Kugeln, umfasst beziehungsweise daraus besteht. Beispielhaft aber nicht abschließend seien hier körnige oder pulverförmige Materialien genannt.

Unter einem "Träger" kann insbesondere eine in einem fertig gestellten Paneel als Kern beziehungsweise als Basislage dienende Lage verstanden werden, die insbesondere einen Naturstoff, wie etwa einen Holzwerkstoff, einen Faserwerkstoff oder einen Werkstoff umfassend einen Kunststoff aufweisen kann. Beispielsweise kann der Träger dem Paneel bereits eine geeignete Stabilität verleihen oder zu dieser beitragen.

Unter einem "bahnartigen Träger" kann dabei ein Träger verstanden werden, der etwa in seinem Herstellungsprozess eine bahnartige und damit im Vergleich zu seiner Dicke beziehungsweise Breite deutlich größere Länge aufweist und deren Länge beispielsweise größer als 15 Meter betragen kann.

Unter einem "plattenförmigen Träger" kann dabei ferner im Sinne der vorliegenden Erfindung ein Träger verstanden werden, der durch Vereinzelung aus dem bahnartigen Träger geformt ist und in der Form einer Platte ausgebildet ist. Ferner kann der plattenförmige Träger bereits die Form und/oder Größe des herzustellenden Paneels vorgeben. Jedoch kann der plattenförmige Träger auch als Großplatte vorgesehen sein. Eine Großplatte im Sinne der Erfindung ist dabei insbesondere ein Träger, dessen Abmessungen die Abmessungen der letztendlichen Dekorpaneele um ein mehrfaches überschreiten und welche im Laufe des Herstellungsverfahrens in eine entsprechende Mehrzahl von Dekorpaneelen zerteilt wird, beispielsweise durch Sägen, Laser- oder Wasserstrahlschneiden. Beispielsweise kann die Großplatte dem bahnförmigen Träger entsprechen.

"Holzwerkstoffe" im Sinne der Erfindung sind dabei neben Vollholzwerkstoffen auch Materialien wie beispielsweise Brettsperrholz, Brettschichtholz, Stabsperrholz, Funiersperrholz, Furnierschichtholz, Funierstreifenholz und Biegesperrholz. Darüber hinaus sind unter Holzwerkstoffen im Sinne der Erfindung auch Holzspanwerkstoffe wie beispielsweise Spanpressplatten, Strangpressplatten, Grobspanplatten (Oriented Structural Board, OSB) und Spanstreifenholz sowie auch Holzfaserwerkstoffe wie beispielsweise Holzfaserdämmplatten (HFD), mittelharte und harte Faserplatten (MB, HFH), sowie insbesondere mitteldichte Faserplatten (MDF) und hochdichte Faserplatten (HDF) zu verstehen. Auch moderne Holzwerkstoffe wie Holz-Polymer-Werkstoffe (Wood Plastic Composite, WPC), Sandwichplatten aus einem leichten Kernmaterial wie Schaumstoff, Hartschaum oder Papierwaben und einer darauf aufgebrachten Holzschicht, sowie mineralisch, beispielsweise mit Zement, gebundene Holzspanplatten bilden Holzwerkstoffe im Sinne der Erfindung. Auch Kork stellt dabei einen Holzwerkstoff im Sinne der Erfindung dar.

Im Sinne der Erfindung sind unter dem Begriff "Faserwerkstoffe" Materialien wie beispielsweise Papier und Vliese auf Basis pflanzlicher, tierischer, mineralischer oder auch künstlicher Fasern zu verstehen, ebenso wie Pappen. Beispiele sind Faserwerkstoffe aus pflanzlichen Fasern und neben Papieren und Vliesen aus Zellstofffasern Platten aus Biomasse wie Stroh, Maisstroh, Bambus, Laub, Algenextrakte, Hanf, Baumwolle oder Ölpalmenfasern. Beispiele für tierische Faserwerkstoffe sind etwa keratinbasierte Materialien wie beispielsweise Wolle oder Rosshaar. Beispiele für mineralische Faserwerkstoffe sind aus Mineralwolle oder Glaswolle.

Es konnte überraschender Weise gezeigt werden, dass es durch das vorbeschriebene Verfahren ermöglicht werden kann, eine besonders vorteilhafte Herstellung insbesondere eines Trägers eines Wand- oder Bodenpaneels zu kombinieren mit Materialien, welche zur Herstellung des Trägers des Paneels aufgrund ihrer herausragenden Eigenschaften besonders bevorzugt sind. Dabei kann durch eine Kombination der vorbeschriebenen Verfahrensschritte ein Herstellungsverfahren insbesondere eines Trägers mit herausragenden Materialien eines dekorierten Wand- oder Bodenpaneels mit einer verbesserten Effektivität ermöglicht werden, welches Verfahren darüber hinaus das Erzeugen höchst adaptierbarer und sehr stabiler Paneele erlaubt. Somit lassen sich auf einfache Weise Paneele erzeugen, welche bevorzugte Eigenschaften aufweisen können.

Das Verfahren zur Herstellung eines Wand- oder Bodenpaneels umfasst die folgenden Verfahrensschritte.

Zunächst wird gemäß dem vorliegenden Verfahren ein Träger beziehungsweise ein Kern erzeugt. Das vorbeschriebene Verfahren umfasst hierfür gemäß Verfahrensschritt a) zunächst das Bereitstellen eines schüttfähigen Trägermaterials. Das Trägermaterial dient als Basis zur Herstellung von insbesondere plattenförmigen Trägern für Paneele. Es kann beispielsweise als einheitliches Material vorliegen oder auch als Materialmischung aus zwei oder mehreren Materialien. Dabei sollte das Trägermaterial oder zumindest ein Bestandteil des Trägermaterials einen Schmelzpunkt oder einen Erweichungspunkt aufweisen, um das Trägermaterial in einem weiteren Verfahrensschritt durch Hitzeeinwirkung zu Formen, wie dies nachstehend im Detail erläutert ist. In besonders vorteilhafter Weise kann das Trägermaterial als schüttfähiger Feststoff beziehungsweise als Granulat bereitgestellt werden, wobei das Granulat in Abhängigkeit des verwendeten Materials rein beispielhaft etwa eine Korngröße in einem Bereich von ≥ 100µm bis ≤ 10mm aufweisen kann. Dies ermöglicht eine problemlose Lagerfähigkeit und ferner eine besonders gute Adaptierbarkeit an eine gewünschte Materialzusammensetzung. Denn insbesondere in granularer Form kann eine besonders homogene Mischung verschiedener Bestandteile erzeugt werden, wobei eine besonders definierte Mischung mit einer genau einstellbaren Zusammensetzung erhältlich ist. Beispielhaft können sogenannte Dryblends verwendet werden, also trockene Kunststoffpulver mit Zuschlagstoffen. Darüber hinaus lässt sich ein Granulat insbesondere in dem vorbeschriebenen Größenbereich sehr homogen und ferner sehr definiert auf einem Untergrund verteilen, so dass sich ein Träger mit einem höchst definierten Eigenschaftsprofil erzeugen lässt. Eine bevorzugte Schüttung beziehungsweise Verteilung des Trägermaterials kann dabei eine Abweichung der Schüttdichte von ≤5%, insbesondere ≤3% aufweisen.

Gemäß Verfahrensschritt b) wird das schüttfähige, insbesondere granulare, Trägermaterial zwischen zwei bandartigen Fördermitteln angeordnet. Im Detail wird ein unteres bandartiges Fördermittel umlaufend verfahren und in einem definierten Abstand zu dem unteren Fördermittel wird ein oberes bandartiges Fördermittel umlaufend verfahren. Das Trägermaterial kann so auf das untere Fördermittel aufgebracht werden und anschließend durch das untere und das obere Fördermittel begrenzt werden. Durch eine exakte Streuung kann dabei auf eine seitliche Begrenzung verzichtet werden. Durch die beiden Fördermittel kann das Trägermaterial somit zu beziehungsweise durch einzelne Bearbeitungsstationen gefördert und zu einem Träger verarbeitet werden. Weiterhin kann das Trägermaterial bereits in diesem Verfahrensschritt vorgeformt werden. Somit können die bandartigen Fördermittel zwei Funktionen übernehmen, nämlich die eines Transportmittels und die einer Form.

Dabei können die bandartigen Fördermittel zumindest im Bereich der Zweibandpresse, wie dies nachfolgend beschrieben ist, zumindest teilweise aus Teflon beziehungsweise aus Polytetrafluorethylen (PTFE) ausgestaltet sein. Beispielsweise können die Bänder vollständig aus Polytetrafluorethylen geformt sein, oder es können Bänder verwendet werden, welche mit einer Außenbeschichtung aus Polytetrafluorethylen versehen sind. In letzterem Fall können etwa glasfaserverstärkte Kunststoffbänder oder auch Stahlbänder Verwendung finden. Durch derartige Fördermittel kann aufgrund der Antihafteigenschaften dieses Werkstoffs eine besonders definierte beispielsweise glatte Oberfläche des erzeugten Trägers erzeugbar sein. So kann verhindert werden, dass das geförderte Trägermaterial an den Fördermitteln anhaftet und so die Oberflächenstruktur unmittelbar oder durch anhaftendes Material in einem nächsten Zyklus negativ beeinflusst. Darüber hinaus ist Polyterafluorethylen auch bei hohen Temperaturen beständig gegen Chemikalien wie auch gegen eine Zersetzung, so dass zum Einen eine problemlose Temperaturbehandlung des Trägermaterials möglich ist und die Fördermittel ferner auch für einen langen Zeitraum stabil sind. Darüber hinaus kann das Trägermaterial frei wählbar sein.

Die Fördermittel können dabei die gesamte Vorrichtung durchlaufen, oder können unterbrochen sein und als mehrere Fördermittel ausgestaltet sein.

Das Austragen des Trägermaterials gemäß Verfahrens schritt b) kann dabei insbesondere mittels eines oder einer Mehrzahl an Streuköpfen realisierbar sein, welche das Trägermaterial definiert austragen können. Bezüglich der Streuköpfe können diese beispielsweise Bestandteil eines Streuaggregats sein und wenigstens eine rotierende Streuwalze aufweisen. Beispielsweise kann ein Trichter vorgesehen sein, der das auszutragende Material definiert auf die Streuwalze austragen kann. Dabei kann ferner ein Rakel vorgesehen sein, welches das Material in Vertiefungen der Walze streicht. Anschließend kann das Material mit Hilfe einer rotierenden Bürstwalze aus der Streuwalze ausgetragen werden, wobei es gegen eine Prallfläche trifft und von dort auf das Fördermittel gleitet. Um die Streubreite zu regulieren kann ferner eine Streubreiteneinstellung vorgesehen sein. In dieser Ausgestaltung kann ein besonders homogenes Austragen des Trägermaterials erfolgen, was gleichermaßen zu einem homogenen Träger mit definierter Qualität führen kann.

Beispielsweise kann ein Streukopf oder können zwei, drei oder mehr Streuköpfe vorgesehen sein. Dadurch kann der Träger auf besonders einfache Weise besonders maßschneiderbar sein, indem beispielsweise eine gewünschte Materialmischung bereitgestellt werden kann. In dieser Ausgestaltung kann die Mischung problemlos während des Herstellungsprozesses oder zwischen zwei Chargen angepasst werden, so dass eine besonders große Variabilität sichergestellt werden kann. Darüber hinaus kann durch eine unterschiedliche Bestückung der einzelnen Streuköpfe eine Mischung für das Trägermaterial erst unmittelbar vor der Verarbeitung erzeugt werden, so dass eine negative Beeinflussung der verschiedenen Komponenten untereinander und eine dadurch bedingte Verringerung der Qualität des hergestellten Trägers verhindert werden kann.

In einem weiteren Schritt erfolgt gemäß Verfahrensschritt c) ein Formen des zwischen den bandartigen Fördermitteln angeordneten Trägermaterials unter Einwirkung von Temperatur beziehungsweise Wärme. In diesem Verfahrensschritt erfolgt durch die einwirkende Wärme beziehungsweise Hitze somit ein Aufschmelzen beziehungsweise Erweichen des Trägermaterials oder zumindest eines Teils desselben, wodurch beispielsweise das Granulat formbar werden kann. In diesem Zustand kann es den zwischen den Fördermitteln sich ausbildenden Aufnahmeraum homogen ausfüllen und so einen bahnförmigen Träger ausbilden, der weiter behandelt werden kann.

Der so ausgebildete bahnförmige Träger kann gleichzeitig zu oder nach Verfahrensschritt c) folgend gemäß Verfahrensschritt d) komprimiert werden. Dieser Verfahrensschritt kann insbesondere in einer geeigneten Presse beziehungsweise Walze erfolgen. Es erfolgt hier somit ein erstes Verdichten des bahnförmigen Trägers. Bei diesem Schritt kann der Träger bereits im Wesentlichen seine gewünschte Dicke erhalten, so dass bei folgenden Bearbeitungsschritten lediglich ein geringfügiges Verdichten erfolgen braucht und die weiteren Schritte somit besonders schonend verlaufen können, wie dies nachstehend im Detail erläutert wird. Dabei kann insbesondere sichergestellt werden, dass die Temperatur des Trägers soweit abgekühlt ist, dass eine geeignete Komprimierbarkeit unter Erhalt des gewünschten Ergebnisses ermöglicht werden kann.

In einem weiteren Verfahrens schritt e) erfolgt nun ein weiteres Behandeln des Trägers unter Einwirkung von Druck unter Verwendung einer Zweibandpresse. In diesem Verfahrensschritt können insbesondere die Oberflächeneigenschaften des Trägers eingestellt werden. Beispielsweise kann in diesem Verfahrensschritt insbesondere eine Glättung der Oberfläche erfolgen. Hierzu kann der zuvor verdichtete Träger unter Einwirkung von Druck behandelt werden, wobei insbesondere der Druck gering gewählt werden kann derart, dass diese zweite Komprimierung lediglich in einem sehr geringen Bereich stattfindet. Beispielhaft kann eine Komprimierung in einem Bereich von ≤ 10%, ≤5%, insbesondere ≤ 3% der Gesamtdicke des Trägers vor dem Komprimieren erfolgen. Beispielsweise kann eine Verdichtung in einem Bereich von 0,2-0,3mm bei einer Plattendicke von 4,5mm erfolgen. Somit kann die Ausgestaltung der Bearbeitungsvorrichtung in diesem Verfahrensschritt insbesondere gewählt werden in Abhängigkeit einer gewünschten Einstellung der Oberflächeneigenschaften, was besonders schonend sein kann. Somit kann die Zweibandpresse als Kalibrierungszone dienen, insbesondere zum Einstellen der endgültigen Oberflächeneigenschaften wie auch der Dicke des Trägers dienen.

Dabei kann insbesondere das Verwenden einer Zweibandpresse von Vorteil sein, da mit einer derartigen Presse besonders schonende Komprimierungsschritte möglich sind und ferner die Oberflächengüte besonders effektiv und definiert eingestellt werden kann. Weiterhin kann insbesondere das Verwenden einer Bandpresse hohe Liniengeschwindigkeiten ermöglichen, so dass der gesamte Prozess einen besonders hohen Durchlauf ermöglichen kann.

Beispielsweise kann eine derartige Bandpresse, welche meist einen recht langen Bearbeitungsraum in der Förderrichtung des Trägers aufweist, eine Mehrzahl von Temperierzonen aufweisen, was ein Temperaturprofil und damit eine effektive Einstellung der Oberflächeneigenschaften auch bei hohen Liniengeschwindigkeiten erlauben kann.

Darüber hinaus kann etwa durch das Vorsehen von Pneumatikzylindern eine besonders gleichmäßige und definiert einstellbare Bandspannung der Zweibandpresse ermöglicht werden, so dass die Einstellung der Oberflächengüte wie auch der Komprimierung besonders exakt sein kann. Die Bandpresse kann dabei etwa Stahlbänder beispielsweise ohne Beschichtung oder etwa mit Polyterafluorethylen beschichtet, umfassen und/oder etwa durch eine Thermalölheizung temperierbar sein.

Ein Glätten beiziehungsweise das Einstellen der Oberflächengüte kann dabei in diesem Schritt bedeuten, dass zwar die oberste Oberfläche geglättet wird, etwa bereits eingebrachte Strukturen beziehungsweise Poren jedoch nicht oder nur in einem definierten Bereich beeinflusst werden, so dass diese auch nach diesem Verfahrensschritt noch in gewünschter Weise vorliegen können, insoweit dies erwünscht ist. Dies kann insbesondere durch die Verwendung einer Bandpresse mit geeignetem Temperaturprofil und mit geeigneten Druckwerten ermöglicht werden.

Dabei ist es ferner vorgesehen, dass der Träger vor oder in der Zweibandpresse und damit insbesondere, während oder vor Verfahrensschritt e) unter den Schmelzpunkt oder den Erweichungspunkt eines Kunststoffbestandteils des Trägermaterials gekühlt wird. Dabei kann ein Kühlen nur in einem begrenzten Bereich erfolgen, so dass der Träger zwar noch eine verglichen zu der Raumtemperatur (22°C) erhöhte Temperatur aufweist, jedoch unterhalb der zuvor eingestellten erhöhten Temperatur liegt und dabei bevorzugt und in Abhängigkeit des verwendeten Kunststoffs, unterhalb den Schmelzpunkt oder den Erweichungspunkt des in dem Trägermaterial enthaltenen Kunststoffs. Dies kann beispielsweise durch eine geeignete Wahl der Temperatur der Temperiereinrichtungen erfolgen, welche sich in der Zweibandpresse befinden, oder der Träger kann insbesondere durch bevor der Zweibandpresse angeordnete Temperiermittel gekühlt beziehungsweise weniger erhitzt werden. Insbesondere durch eine Kühlung des Trägers kann eine besonders qualitativ hochwertiges Oberflächenbild erzeugt werden, da die Bänder der Zweibandpresse, welche etwa aus Polytetrafluorethylen (Teflon) ausgestaltet sein können, geschont werden. Weiterhin kann ein Schüsseln beziehungsweise ein Auftreten von Lunkern oder Poren verhindert werden, so dass die Oberfläche des Trägers besonders hochwertig sein kann. Geeignete Temperaturen liegen beispielsweise und nicht beschränkend in einem Bereich von unterhalb von 130°C, etwa in einem Bereich von ≥ 80°C bis ≤ 115°C, beispielsweise von 120°C, für Polyethylen.

Im weiteren Verlauf erfolgt in einem weiteren Verfahrensschritt f) anschließend gegebenenfalls ein weiteres Abkühlen des bahnförmigen Trägers. Der Träger kann insbesondere durch das Vorsehen einer Kühlvorrichtung mit definierten Kühlstufen auf eine Temperatur abgekühlt werden, welche der Raumtemperatur entspricht oder rein beispielhaft in einem Bereich von bis zu 20°C darüber liegt. Beispielsweise kann eine Mehrzahl an Kühlzonen vorliegen, um ein definiertes Abkühlen des Trägers zu ermöglichen.

Nach einem Abkühlen des erzeugten Trägers kann der Träger zunächst in bahnartiger Form oder als vereinzelte plattenartige Träger gelagert werden und das Verfahren kann zunächst beendet sein. Vorzugsweise schließen sich jedoch unmittelbar weitere Behandlungsschritte an, welche etwa ohne ein Anschleifen realisierbar sein können, insbesondere um den bereitgestellten Träger derart zu bearbeiten, um ein fertiges Paneel zu erzeugen, wie dies nachstehend im Detail erläutert ist.

Zur Herstellung eines fertigen Paneels umfasst das Verfahren die weiteren folgenden Verfahrensschritte, um den Träger mit einem Dekor zu versehen und dieses mit einer Schutzschicht zu beschichten. Dabei werden die nachfolgenden Schritte bevorzugt unmittelbar mit dem erzeugten bahnförmigen Träger durchgeführt. Es ist von der Erfindung jedoch ebenfalls mit umfasst, dass der bahnförmige Träger vor einem der Verfahrensschritte g) bis j) zunächst in eine Vielzahl plattenförmiger Träger unterteilt wird und/oder der plattenförmigen Träger durch die entsprechend folgenden Verfahrensschritte weiter behandelt wird. Die nachstehenden Erläuterungen gelten für beide Alternativen entsprechend, wobei zur Vereinfachung im Weiteren von einer Behandlung des Trägers gesprochen wird.

Gemäß Verfahrensschritt k) kann somit gegebenenfalls zunächst etwa vor dem Verfahrensschritt g) ein Vorbehandeln des Trägers zur elektrostatischen Entladung erfolgen. Dies kann insbesondere dazu dienen, das Auftreten von Unschärfen im Laufe der Dekoraufbringung zu vermeiden. Dies ist insbesondere für Druckverfahren zum Aufbringen der Dekorschichten geeignet, da die sich im Laufe des Produktionsprozesses aufbauende elektrostatische Ladung in den zu bedruckenden Trägern zu einer Ablenkung der Farb- bzw. Tintentropfen auf ihrem Weg vom Druckkopf zur der zu bedruckenden Oberfläche führt. Die so hervorgerufene Ungenauigkeit des Farbauftrags führt zu der wahrnehmbaren Unschärfe des Druckbildes.

Dabei kann die Einrichtung zur Ableitung elektrostatischer Ladungen wenigstens eine Rolle, Bürste oder Lippe aus einem leitfähigen Material mit einer Leitfähigkeit ≥ 1*10³ Sm⁻¹ aufweisen, welche den Träger zumindest im Bereich des Druckwerks elektrisch leitend kontaktiert und welche mit einem elektrischen Massenpotential verbunden ist. Dabei kann das elektrische Massenpotential beispielsweise durch eine Erdung bereitgestellt werden. Ferner kann eine Einrichtung zur Ableitung elektrostatischer Ladungen beispielsweise eine Einrichtung zur Erzeugung einer Corona-Entladung sein.

Gemäß Verfahrensschritt g) kann weiterhin gegebenenfalls ein Dekoruntergrund auf zumindest einen Teilbereich des Trägers aufgebracht werden. Beispielsweise kann zunächst ein Primer insbesondere für Druckverfahren als Dekoruntergrund aufgebracht werden, etwa in einer Dicke von ≥ 10µm bis ≤ 60 µm. Dabei kann als Primer eine flüssige strahlungshärtende Mischung auf Basis eines Urethans oder eines Urethanacrylats, gegebenenfalls mit einem oder mehreren von einem Photoinitiator, einem Reaktivverdünner, einem UV-Stabilisator, einem Rheologiemittel wie einem Verdicker, Radikalfänger, Verlaufshilfsmittel, Entschäumer oder Konservierungsmittel, Pigment und/oder einem Farbstoff eingesetzt werden. Beispielsweise kann das Urethanacrylat in Form von reaktiven Oligomeren bzw. Prepolymeren in der Primer-Zusammensetzung enthalten sein. Unter dem Begriff "reaktives Oligomer" bzw. "Prepolymer" ist dabei im Sinne der Erfindung eine Urethanacrylat-Einheiten aufweisende Verbindung zu verstehen, welche strahlungsinduziert, ggf. unter Zusatz eines reaktiven Bindemittels oder eines Reaktivverdünners zu Urethan-Polymer oder Urethanacrylat-Polymer reagieren kann. Urethanacrylate im Sinne der Erfindung sind dabei Verbindungen, welche im Wesentlichen aus einem oder mehreren aliphatischen Strukturelementen und Urethangruppen aufgebaut sind. Aliphatische Strukturelemente umfassen sowohl Alkylengruppen, vorzugsweise mit 4 bis 10 C-Atomen, als auch Cycloalkylengruppen mit vorzugsweise 6 bis 20 C-Atomen. Sowohl die Alkylen- als auch die Cycloalkylengruppen können mit C₁-C₄-Alkyl, insbesondere mit Methyl, ein- oder mehrfach substituiert sein sowie ein oder mehrere nicht benachbarte Sauerstoffatome enthalten. Die aliphatischen Strukturelemente sind gegebenenfalls überquartäre oder tertiäre Kohlenstoffatome, über Harnstoffgruppen, Biureth-, Urethdion-, Allophanat-, Cyanurat-, Urethan-, Ester- oder Amidgruppen oder über Ethersauerstoff oder Aminstickstoff miteinander verbunden. Ferner können Urethanacrylate im Sinne der Erfindung auch ethylenisch ungesättigte Strukturelemente aufweisen. Hierbei handelt es sich vorzugsweise um Vinyl- oder Allylgruppen, die auch mit C₁-C₄-Alkyl, insbesondere Methyl substituiert sein können und welche sich insbesondere von α,β-ethylenisch ungesättigten Carbonsäuren bzw. deren Amiden ableiten. Besonders bevorzugte ethylenisch ungesättigte Struktureinheiten sind Acryloyl- und Me-thacryloylgruppen wie Acrylamido und Methacrylamido und insbesondere Acryloxy und Methacryloxy. Strahlungshärtbar im Sinne der Erfindung bedeutet, dass die Primerzusammensetzung induziert durch elektromagnetische Strahlung geeigneter Wellenlänge, wie beispielsweise UV-Strahlung, oder Elektronenstrahlung zumindest teilpolymerisiert werden kann.

Die Verwendung von strahlungshärtbaren Primern auf Basis von Urethanacrylaten ermöglicht in besonders vorteilhafter Weise eine sich umgehend an den Auftrag und die strahlungsinduzierte Härtung der Primerschicht anschließende Aufbringung eines Dekor, beispielsweise mittel Digitaldrucktechnik. Dabei sorgt die Primerschicht für eine gute Haftung des aufgebrachten Dekors auf der mit dem Primer beschichteten Trägeroberfläche. Dabei besitzen Urethanacrylate den Vorteil einer guten Haftung sowohl gegenüber dem Trägermaterial, als auch gegenüber der Dekorschicht, also der Dekorfarbe oder -tinte. Dies ist unter anderem durch die bei dieser Art der Polymere auftretenden Polymerisationsreaktionen zu begründen, bei welcher zum einen eine strahlungsinduzierte radikalische Polymerisation der OH-Gruppen auftritt, zum anderen eine Nachhärtung des Polymers über die NCO-Gruppen. Dies führt dazu, dass nach der strahlungsinduzierten Härtung umgehend eine klebfreie und weiterbearbeitbare Oberfläche erhalten wird, während die endgültigen Eigenschaften der Primerschicht auch durch die NCO-Gruppen basierte Nachhärtung beeinflusst werden und für eine sichere Bindung zum Trägermaterial sorgen. Darüber hinaus stellt die auftretende Nachhärtung sicher, dass eine hinreichende Schichtstabilität auch in weniger oder nicht belichteten Bereichen des Trägers erreicht wird. Hierdurch lassen sich mit dem erfindungsgemäßen Verfahren insbesondere auch vorstrukturierte Träger, also Träger, deren Oberfläche bereits eine dreidimensionale Strukturierung aufweisen, sicher mit Primerschicht versehen, wodurch sichergestellt ist, dass das anschließend aufgebrachte Dekor haftfest mit dem Träger verbunden ist.

Der Primer kann im erfindungsgemäßen Verfahren bevorzugt mittels Gummiwalzen, Gießmaschine oder durch Aufsprühen auf die Trägerplatte aufgebracht werden. Bevorzugt wird der Primer in einer Menge zwischen ≥1 g/m² und ≤100 g/m², vorzugsweise zwischen ≥10 g/m² und ≤50 g/m², insbesondere zwischen ≥20 g/m² und ≤40 g/m² aufgetragen. Im Anschluss an den Auftrag des Primers auf die Trägeroberfläche erfolgt eine Bestrahlung mit einer Strahlungsquelle geeigneter Wellenlänge.

Neben der Verwendung eines Primer ist es möglich, das Dekor auf ein mit einem entsprechenden Dekor bedruckbares Dekorpapier aufzubringen, welches etwa mittels einer zuvor auf den Träger aufgebrachten Harzschicht als Verbindungsmittel vorgesehen sein kann. Ein derartiger Druckuntergrund ist sowohl für Flexo-Druck, Offset-Druck oder Siebdruckverfahren, als auch insbesondere für Digitaldrucktechniken, wie beispielsweise Inkjet-Verfahren oder Laserdruck-Verfahren geeignet. Zur Aufbringung der Harzschicht kann es vorzugsweise vorgesehen sein, dass eine Harzzusammensetzung aufgebracht wird, welche als Harzkomponente wenigstens eine Verbindung ausgewählt aus der Gruppe bestehend aus Melaminharz, Formaldehydharz, Harnstoffharz, Phenolharz, Epoxidharz, ungesättigtes Polyesterharz, Diallylphthalat oder Mischungen dieser aufweist. Dabei kann die Harzzusammensetzung beispielsweise in einer Auftragsmenge zwischen ≥5 g/m² und ≤40 g/m², vorzugsweise ≥10 g/m² und ≤30 g/m² aufgetragen werden. Ferner kann ein Papier oder Vlies mit einer Grammatur zwischen ≥30 g/m² und ≤80 g/m², vorzugsweise zwischen ≥40 g/m² und ≤70 g/m² auf den plattenförmigen Träger aufgebracht.

Weiterhin kann gemäß Verfahrensschritt h) ein Aufbringen eines eine Dekorvorlage nachbildenden Dekors auf zumindest einen Teilbereich des Trägers erfolgen. Dabei kann das Dekor durch den sogenannten Direktdruck aufgebracht werden. Unter dem Begriff "Direktdruck" wird im Sinne der Erfindung das Aufbringen eines Dekors direkt auf den Träger eines Paneels oder auf eine auf dem Träger aufgebrachte nicht bedruckte Faserwerkstoffschicht beziehungsweise ein Dekoruntergrund verstanden. Es können unterschiedliche Drucktechniken, wie beispielsweise Flexo-Druck, Offset-Druck oder Siebdruck zum Einsatz gelangen. Insbesondere können als Digitaldrucktechniken beispielsweise Inkjet-Verfahren oder Laserdruck-Verfahren eingesetzt werden.

Beispielsweise kann, um eine Dekorvorlage auf besonders detailgetreue und hochgenaue Weise in dreidimensionaler Form zu imitieren beziehungsweise nach zu empfinden, Das Dekor vorlagenidentisch aufgebracht werden. Insbesondere können die dreidimensionalen Dekordaten bereitgestellt werden durch ein dreidimensionales Abtasten der Dekorvorlage mittels elektromagnetischer Strahlung, beispielsweise durch einen dreidimensionalen Scanner (3D-Scanner). Dabei können eine Mehrzahl an Dekorschichten mit zumindest teilweise unterschiedlichem Flächenauftrag auf Basis bereitgestellter dreidimensionaler Dekordaten sukzessive aufgebracht wird.

Ferner können die Dekorschichten aus einer insbesondere strahlungshärtbaren Farbe und/oder Tinte ausgebildet werden. Beispielsweise kann eine UV-härtbare Farbe oder Tinte verwendet werden. In dieser Ausgestaltung kann eine besonders detailgetreue und übereinstimmende Nachbildung der Dekorvorlage erreichbar sein. Denn zum Einen kann auf diese Weise ohne das Vorsehen weiterer Maßnahmen und hochgenau eine Synchronpore erzielbar sein. Eine Synchronpore kann dabei insbesondere eine Pore oder eine andersartige Struktur sein, welche räumlich exakt dort angeordnet ist, wo sie optisch dargestellt ist durch ein mit dem optischen Dekormerkmalen übereinstimmenden haptischen Strukturierung. Dies ist im Wesentlichen in dieser Ausgestaltung automatisch der Fall, da die strukturelle Ausgestaltung eben durch die Farbe beziehungsweise Tinte erzeugt wird. Darüber hinaus weisen Dekorvorlagen, wie beispielsweise Holzwerkstoffe, oftmals eine Variation des Farbeindrucks nicht nur entlang ihrer Breite beziehungsweise Länge sondern ebenfalls entlang ihrer Tiefe auf. Auch dieser Farbeindruck beziehungsweise Farbverlauf kann insbesondere in dieser Ausgestaltung besonders detailgetreu nachempfunden werden, was auch den Gesamteindruck des Paneels noch identischer erscheinen lässt. Dabei lässt sich insbesondere dann, wenn die verwendete Farbe beziehungsweise Tinte strahlungshärtbar ist, eine besonders schnelle Verfestigung erreichen, wodurch die Mehrzahl an Schichten schnell aufeinander aufbringbar sein können, was auch den Gesamtprozess in einer geringeren Zeit realisierbar und damit besonders kostengünstig gestalten kann.

Unter dem Begriff strahlungshärtbare Farbe ist dabei im Sinne der Erfindung eine binde- und/oder füllmittelmittelhaltige sowie Farbpigmente aufweisende Zusammensetzung zu verstehen, welche induziert durch elektromagnetische Strahlung geeigneter Wellenlänge, wie beispielsweise UV-Strahlung oder Elektronenstrahlung, zumindest teilpolymerisiert werden kann.

Unter dem Begriff strahlungshärtbare Tinte ist dabei entsprechend im Sinne der Erfindung eine im Wesentlichen Füllmittel freie, Farbpigmente aufweisende Zusammensetzung zu verstehen, welche induziert durch elektromagnetische Strahlung geeigneter Wellenlänge, wie beispielsweise UV-Strahlung oder Elektronenstrahlung, zumindest teilpolymerisiert werden kann.

Dabei können die Dekorschichten jeweils in einer Dicke in einem Bereich von ≥ 5µm bis ≤ 10µm aufgebracht werden.

Es kann ferner vorgesehen sein, neben einer bezüglich Farbe und/oder Struktur positiven Abbildung ferner auch eine entsprechende negative Abbildung der Dekorvorlage aufzubringen. Im Detail kann, wie es beispielsweise von einem Positiv-Beizen beziehungsweise Negativ-Beizen für Holzwerkstoffe bekannt ist, durch die Verwendung von digitalen Daten der Farbeindruck beispielsweise einer Maserung umgekehrt werden, so dass bezüglich der Farbe beziehungsweise insbesondere helleren und dunkleren Bereichen ein Negativ entsteht. Entsprechendes ist neben dem Farbeindruck ebenfalls für die aufgebrachte Struktur möglich, so dass auch bezüglich der strukturellen Ausgestaltung ein Negativ realisierbar ist. Auch derartige Effekte sind auf Basis digitaler dreidimensionaler Daten problemlos und ohne Vorlaufzeit beziehungsweise Umbauten in einen Herstellungsprozess integrierbar.

Gemäß Verfahrensschritt i) kann ein Aufbringen einer Schutzschicht auf zumindest einen Teilbereich des Dekors vorgesehen sein. Eine derartige Schicht zum Schutz des aufgebrachten Dekors kann insbesondere als Verschleiß- oder Deckschicht oberhalb der Dekorschicht in einem nachfolgenden Verfahrensschritt aufgebracht werden, welche insbesondere die Dekorschicht vor Abnutzung oder Beschädigung durch Schmutz, Feuchtigkeitseinfluss oder mechanische Einwirkungen, wie beispielsweise Abrieb, schützt. Beispielsweise kann es vorgesehen sein, dass die Verschleiß- und/oder Deckschicht als vorproduzierte Overlayschicht, etwa basierend auf Melamin, auf den bedruckten Träger aufgelegt und mit diesem durch Druck- und/oder Wärmeeinwirkung verbunden wird. Ferner kann es bevorzugt sein, dass zur Ausbildung der Verschleiß- und/oder Deckschicht ebenfalls eine strahlungshärtbare Zusammensetzung, wie beispielsweise ein strahlungshärtbarer Lack, wie einem Acryllack, aufgebracht wird. Dabei kann es vorgesehen sein, dass die Verschleißschicht Hartstoffe wie beispielsweise Titannitrid, Titancarbid, Siliciumnitrid, Siliciumcarbid, Borcarbid, Wolframcarbid, Tantalcarbid, Aluminiumoxid (Korund), Zirconiumoxid oder Mischungen dieser aufweist, um die Verschleißfestigkeit der Schicht zu erhöhen. Dabei kann die Auftragung beispielsweise mittels Walzen, wie Gummiwalzen oder mittels Gießvorrichtungen aufgetragen werden.

Weiterhin kann die Deckschicht zunächst teilgehärtet werden und im Anschluss eine Endlackierung mit einem Urethanacrylat und eine Endhärtung, etwa mit einem Galliumstrahler, durchgeführt werden.

Ferner kann die Deck- und/oder Verschleißschicht Mittel zur Verringerung der statischen (elektrostatischen) Aufladung des letztendlichen Laminates aufweisen. Beispielsweise kann es dazu vorgesehen sein, dass die Deck- und/oder Verschleißschicht Verbindungen wie z.B. Cholinchlorid aufweist. Das Antistatikmittel kann dabei beispielsweise in einer Konzentration zwischen ≥0,1 Gew.-% und ≤40,0 Gew.-%, bevorzugt zwischen ≥1,0 Gew.-% und ≤30,0 Gew.-% in der Deck- und/oder Zusammensetzung zur Ausbildung Verschleißschicht enthalten sein.

Desweiteren kann es gemäß Verfahrensschritt j) vorgesehen, dass in die Schutzschicht beziehungsweise Verschleiß- oder Deckschicht eine Strukturierung, insbesondere eine mit dem Dekor übereinstimmende Oberflächenstrukturierung durch das Einbringen von Poren eingebracht wird. Dabei kann es vorgesehen sein, dass die Trägerplatte bereits eine Strukturierung aufweist und eine Ausrichtung eines Druckwerkzeuges zur Aufbringung des Dekors und der Trägerplatte zueinander in Abhängigkeit mittels der mittels optischer Verfahren erfassten Strukturierung der Trägerplatte erfolgt. Zur Ausrichtung des Druckwerkzeuges und der Trägerplatte zueinander kann es dabei vorgesehen sein, dass eine zur Ausrichtung notwendige Relativbewegung zwischen Druckwerkzeug und Trägerplatte zueinander durch eine Verschiebung der Trägerplatte oder durch eine Verschiebung des Druckwerkzeugs erfolgt. Weiterhin kann es vorgesehen sein, dass eine Strukturierung der Dekorpaneele nach dem Auftrag der Deck- und/oder Verschleißschicht erfolgt. Hierzu kann es bevorzugt vorgesehen sein, dass als Deck- und/oder Verschleißschicht eine härtbare Zusammensetzung aufgetragen wird und ein Aushärtungsprozess nur in dem Maße erfolgt, dass lediglich eine Teilhärtung der Deck- und/oder Verschleißschicht erfolgt. In die so teilgehärtete Schicht wird mittels geeigneter Werkzeuge, wie beispielsweise einer Hartmetall-Strukturwalz oder eines Stempels, eine gewünschte Oberflächenstruktur eingeprägt. Dabei erfolgt die Prägung in Übereinstimmung mit dem aufgebrachten Dekor. Zur Gewährleistung einer hinreichenden Übereinstimmung der einzubringenden Struktur mit dem Dekor kann es vorgesehen sein, dass die Trägerplatte und das Prägewerkzeug durch entsprechende Relativbewegungen zueinander ausgerichtet werden. Im Anschluss an die Einbringung der gewünschten Struktur in die teilgehärtete Deck- und/oder Verschleißschicht erfolgt eine weitere Härtung der nun strukturierten Deck- und/oder Verschleißschicht.

Vielfach ist es vorgesehen, dass in solche Verschleiß- oder Deckschichten eine mit dem Dekor übereinstimmende Oberflächenstrukturierung eingebracht ist. Unter einer mit dem Dekor übereinstimmenden Oberflächenstrukturierung ist zu verstehen, dass die Oberfläche des Dekorpaneels eine haptisch wahrnehmbare Struktur aufweist, welche in ihrer Form und ihrem Muster dem aufgebrachten Dekor entspricht, um so eine möglichst originalgetreue Nachbildung eines natürlichen Werkstoffes auch hinsichtlich der Haptik zu erhalten.

Darüber hinaus kann auf der der Dekorseite gegenüberliegenden Seite ein Gegenzug aufgebracht werden. Dabei ist es insbesondere bevorzugt, dass der Gegenzug in einem gemeinsamen Kalandrierschritt mit den Papier oder Vlies auf der Dekorseite aufgebracht wird.

Alternativ oder zusätzlich können die Randbereiche des Paneels strukturiert beziehungsweise profiliert werden, um insbesondere lösbare Verbindungselemente vorzusehen. Diesbezüglich kann bei einer Profilierung im Sinne der Erfindung vorgesehen sein, dass mittels geeigneter materialabhebender Werkzeuge zumindest in einen Teil der Kanten des Dekorpaneels ein dekoratives und/oder funktionales Profil eingebracht wird. Dabei ist unter einem funktionalen Profil beispielsweise die Einbringung eines Nut- und/oder Federprofils in eine Kante zu verstehen, um Dekorpaneele über die eingebrachten Profilierungen miteinander verbindbar zu gestalten. Insbesondere bei Nut- und/oder Federprofilen sind dabei elastische Werkstoffe von Vorteil, da durch diese allein derartige Profile erzeugbar sind, welche besonders einfach handhabbar und stabil sind. So sind insbesondere keine weiteren Materialien notwendig, um die Verbindungselemente zu erzeugen.

Das vorstehend beschriebene Verfahren ermöglicht dabei ein verbessertes Herstellen eines Wandpaneels beziehungsweise Bodenpaneels.

Insbesondere kann das Trägermaterial besonders frei wählbar sein und es können insbesondere Trägermaterialen Verwendung finden, welche für das herzustellende Paneel besonders vorteilhafte Eigenschaften aufweisen können. Beispielsweise können besonders hochwertige Paneele erzeugbar sein, welche bezüglich Erscheinung und Stabilität höchsten Anforderungen genügen können. Dabei kann eine Herstellung besonders effektiv und kostengünstig sein.

Das bei dem Verfahren zum Herstellen eines Wand- und Bodenpaneels anwendbare Verfahren zum Erzeugen eines Trägers kann dabei insbesondere im Rahmen des vorliegenden erfindungsgemäßen Verfahrens zu Herstellen von Wand- und Bodenpaneelen vorteilhaft sein, da es besonders hohe Liniengeschwindigkeiten ermöglicht, die weit über den aus dem Stand der Technik bekannten Liniengeschwindigkeiten, als einer Vorschubgeschwindigkeit des Trägers beziehungsweise der Fördermittel, für das Herstellen eines Paneels liegen können. Dabei können insbesondere durch die Verwendung einer Zweibandpresse Liniengeschwindigkeiten von bis zu 15 m/min, erzielbar sein, wobei Werte von 6m/min oder mehr auch für diesbezüglich problematische Materialien möglich sein können.

Weiterhin kann durch den vorbeschriebenen zweistufigen Komprimierungsvorgang eine sehr genaue Dicke insbesondere für Paneel-Trägermaterialien erzielbar sein, wobei beispielsweise Dickentoleranzen in einem Bereich von 0,1mm oder darunter erzielbar sein können. Somit kann ein durch das vorbeschriebene Verfahren hergestellter Träger neben einer besonders homogenen Zusammensetzung ferner eine besonders gleichmäßige Dicke aufweisen, was ein besonders definiertes und reproduzierbares Produkt und somit eine besonders hohe Qualität erlaubt.

Ferner konnte gefunden werden, dass insbesondere durch das vorbeschriebene Verfahren sehr stabile Träger erzeugbar sein können, welche bezüglich der Stabilität weiter verbessert sein kann.

Gemäß einer Ausgestaltung kann ein Trägermaterial auf Basis eines Kunststoffs oder eines Holz-Kunststoff-Komposit-Werkstoffs (WPC) bereitgestellt werden. Beispielsweise kann die Trägerplatte aus einem thermoplastischen, elastomeren oder duroplastischen Kunststoff ausgebildet sein. Des Weiteren sind Recyclingwerkstoffe aus den genannten Materialien im Rahmen des erfindungsgemäßen Verfahrens einsetzbar. Bevorzugt als Plattenmaterial können dabei insbesondere thermoplastische Kunststoffe, wie Polyvinylchlorid, Polyolefine (beispielsweise Polyethylen (PE), Polypropylen (PP), Polyamide (PA), Polyurethane (PU), Polystyrol (PS), Acrylnitril-Butadien-Styrol (ABS), Polymethylmethacrylat (PMMA), Polycarbonat (PC), Polyethylenterephthalat (PET), Polyetheretherketon (PEEK) oder Mischungen oder Co-Polymerisate diese. Dabei können unabhängig von dem Grundmaterial des Trägers beispielsweise Weichmacher vorgesehen sein, die etwa in einem Bereich von >0 Gew.-% bis ≤ 20 Gew.-%, insbesondere ≤ 10 Gew.-%, vorzugsweise ≤ 7 Gew.-%, beispielsweise in einem Bereich von ≥ 5 Gew.-% bis ≤ 10 Gew.-% vorliegen können. Ein geeignete Weichmacher umfasst etwa den unter der Handelsbezeichnung "Dinsch" von der Firma BASF vertriebenen Weichmacher. Ferner können als Ersatz für herkömmliche Weichmacher Copolymere, wie etwa Acrylate oder Methacrylate, vorgesehen sein. Ferner kann in oder vor der Zweibandpresse in dieser Ausgestaltung der Träger auf eine Temperatur unterhalb der Schmelztemperatur des Kunststoff-Bestandteils gekühlt werden.

Insbesondere thermoplastische Kunststoffe bieten auch den Vorteil, dass die aus ihnen hergestellten Produkte sehr leicht rezykliert werden können. Es können auch Recycling-Materialien aus anderen Quellen verwendet werden. Hierdurch ergibt sich eine weitere Möglichkeit zur Senkung der Herstellungskosten.

Derartige Träger sind dabei sehr elastisch beziehungsweise federnd, was einen komfortablen Eindruck beim Begehen erlaubt und ferner die auftretenden Geräusche bei einem Begehen im Vergleich zu herkömmlichen Materialien reduzieren kann, somit ein verbesserter Trittschall realisierbar sein kann.

Darüber hinaus bieten die vorgenannten Träger den Vorteil einer guten Wasserfestigkeit, da sie eine Quellung von 1% oder weniger aufweisen. Dies gilt in überraschender Weise neben reinen Kunststoffträgern auch für WPC-Werkstoffe, wie diese nachfolgend im Detail erläutert sind.

In besonders vorteilhafter Weise kann das Trägermaterial Holz-Polymer-Werkstoffe (Wood Plastic Composite, WPC) aufweisen oder daraus bestehen. Hier kann beispielhaft ein Holz und ein Polymer geeignet sein, welches in einem Verhältnis von 40/60 bis 70/30, beispielsweise 50/50 vorliegen kann. Als Polymere Bestandteile können etwa Polypropylen, Polyethylen oder ein Copolymer aus den beiden vorgenannten Materialien verwendet werden, wobei ferner Holzmehl als Holzbestandteil Verwendung finden kann. Derartige Materialien bieten den Vorteil, dass diese bereits bei geringen Temperaturen, wie etwa in einem Bereich von ≥ 180°C bis ≤ 200°C in dem vorbeschriebenen Verfahren zu einem Träger geformt werden können, so dass eine besonders effektive Prozessführung, etwa mit beispielhaften Liniengeschwindigkeiten in einem Bereich von 6m/min, ermöglicht werden kann.

Beispielsweise sind für ein WPC-Produkt mit einer 50/50 Verteilung der Holz- und Polymeranteile bei einer beispielhaften Produktstärke von 4,1mm möglich, was einen besonders effektiven Herstellungsprozess ermöglichen kann.

Ferner können so sehr stabile Paneele erzeugt werden, die weiterhin eine hohe Elastizität aufweisen, was insbesondere für eine effektive und kostengünstige Ausgestaltung von Verbindungselementen an dem Randbereich des Trägers und ferner bezüglich einer Trittschalldämmung von Vorteil sein kann. Ferner kann auch die vorgenannte gute Wasserverträglichkeit mit einer Quellung von unter 1% bei derartigen WPC-Materialien ermöglicht werden. Dabei können WPC-Werkstoffe beispielsweise Stabilisatoren und/oder andere Additive aufweisen, welche bevorzugt im Kunststoffanteil vorliegen können.

Weiterhin kann es besonders vorteilhaft sein, dass das Trägermaterial ein PVC-basiertes Material umfasst oder daraus besteht. Auch derartige Materialien können in besonders vorteilhafter Weise für hochwertige Paneele dienen, welche etwa auch in Feuchträumen problemlos verwendbar sind. Ferner bieten sich auch PVC-basierte Trägermaterialien für einen besonders effektiven Herstellungsprozess an, da hier etwa Liniengeschwindigkeiten von 8m/min bei einer beispielhaften Produktstärke von 4,1mm möglich sein können, was einen besonders effektiven Herstellungsprozess ermöglichen kann. Ferner weisen auch derartige Träger eine vorteilhafte Elastizität und Wasserverträglichkeit auf, was zu den vorgenannten Vorteilen führen kann.

Bei Kunststoff-basierten Paneelen wie auch bei WPC-basierten Paneelen können dabei mineralische Füllstoffe von Vorteil sein. Besonders geeignet sind hier etwa Talk oder auch Kalziumcarbonat (Kreide), Aluminiumoxid, Kieselgel, Quarzmehl, Holzmehl, Gips. Beispielsweise kann Kreide vorgesehen sein in einem Bereich von ≥ 30 Gew.-% bis ≤ 70 Gew.-%, wobei durch die Füllstoffe, insbesondere durch die Kreide insbesondere der Schlupf des Trägers verbessert werden kann. Auch können sie in bekannter Weise eingefärbt sein.

Insbesondere kann es vorgesehen sein, dass das Plattenmaterial ein Flammschutzmittel aufweist.

Gemäß einer besonders bevorzugten Ausgestaltung der Erfindung besteht das Trägermaterial aus einer Mischung eines PE/PP Blockcopolymers mit Holz. Dabei kann der Anteil des PE/PP Blockcopolymers sowie der Anteil des Holz zwischen ≥45 Gew.-% und ≤55 Gew.-% liegen. Desweiteren kann das Trägermaterial zwischen ≥0 Gew.-% und ≤10 Gew.-% weiterer Additive, wie beispielsweise Fließhilfsmittel, Thermostabilisatoren oder UV-Stabilisatoren aufweisen. Die Partikelgröße des Holzes liegt dabei zwischen >0µm und ≤600µm mit einer bevorzugten Partikelgrößenverteilung D50 von ≥400µm. Insbesondere kann das Trägermaterial dabei Holz mit einer Partikelgrößenverteilung D10 von ≥400µm aufweisen. Die Partikelgrößenverteilung ist dabei auf den volumetrischen Durchmesser bezogen und bezieht sich auf das Volumen der Partikel. Besonders bevorzugt wird dabei das Trägermaterial als granulierte oder pelletierte vorextrudierte Mischung aus einem PE/PP Blockcopolymer mit Holzpartikeln der angegeben Partikelgrößenverteilung bereitgestellt. Das Granulat und/oder die Pellets können dabei bevorzugt etwa eine Korngröße in einem Bereich von ≥ 400µm bis ≤ 10mm, bevorzugt ≥ 600µm bis ≤ 10mm aufweisen, insbesondere ≥ 800µm bis ≤ 10mm.

Beispielsweise kann das Trägermaterial als Granulat vorliegen und dabei etwa eine zylindrische Form aufweisen. Ferner können unabhängig von der Form aber beispielhaft bei der zylindrischen Form die Granulatpartikel einen Durchmesser in einem Bereich von 2-3mm, beispielsweise 2 oder 3mm, und eine Länge von 2-9mm, beispielsweise 2-7mm oder 5-9mm aufweisen.

Gemäß einer weiteren bevorzugten Ausgestaltung der Erfindung besteht das Trägermaterial aus einer Mischung eines PE/PP Polymerblends mit Holz. Dabei kann der Anteil des PE/PP Polymerblends sowie der Anteil des Holz zwischen ≥45 Gew.-% und ≤55 Gew.-% liegen.

Desweiteren kann das Trägermaterial zwischen ≥0 Gew.-% und ≤10 Gew.-% weiterer Additive, wie beispielsweise Fließhilfsmittel, Thermostabilisatoren oder UV-Stabilisatoren aufweisen. Die Partikelgröße des Holzes liegt dabei zwischen >0µm und ≤600µm mit einer bevorzugten Partikelgrößenverteilung D50 von ≥400µm. Insbesondere kann das Trägermaterial dabei Holz mit einer Partikelgrößenverteilung D10 von ≥400µm aufweisen. Die Partikelgrößenverteilung ist dabei auf den volumetrischen Durchmesser bezogen und bezieht sich auf das Volumen der Partikel. Besonders bevorzugt wird dabei das Trägermaterial als granulierte oder pelletierte vorextrudierte Mischung aus einem PE/PP Polymerblend mit Holzpartikeln der angegeben Partikelgrößenverteilung bereitgestellt. Das Granulat und/oder die Pellets können dabei bevorzugt etwa eine Korngröße in einem Bereich von ≥ 400µm bis ≤ 10mm, bevorzugt ≥ 600µm bis ≤ 10mm aufweisen, insbesondere ≥ 800µm bis ≤ 10mm.

In einer weiteren Ausgestaltung der Erfindung besteht das Trägermaterial aus einer Mischung eines PP-Homopolymers mit Holz. Dabei kann der Anteil des PP-Homopolymers sowie der Holzanteil zwischen ≥45 Gew.-% und ≤55 Gew.-% liegen. Beispielsweise könne die Bestandteile Holz und Polypropylen in einem Verhältnis von 0,5:1 bis 1:0,5, etwa 1:1 vorliegen. Desweiteren kann das Trägermaterial zwischen ≥0 Gew.-% und ≤10 Gew.-% weiterer Additive, wie beispielsweise Fließhilfsmittel, Thermostabilisatoren oder UV-Stabilisatoren aufweisen. Die Partikelgröße des Holzes liegt dabei zwischen >0µm und ≤600µm mit einer bevorzugten Partikelgrößenverteilung D50 von ≥400µm. Insbesondere kann das Trägermaterial dabei Holz eine Partikelgrößenverteilung D10 von ≥400µm aufweisen. Die Partikelgrößenverteilung ist dabei auf den volumetrischen Durchmesser bezogen und bezieht sich auf das Volumen der Partikel. Besonders bevorzugt wird dabei das Trägermaterial als granulierte oder pelletierte vorextrudierte Mischung aus einem PP-Homopolymer mit Holzpartikeln der angegeben Partikelgrößenverteilung bereitgestellt. Das Granulat und/oder die Pellets können dabei bevorzugt etwa eine Korngröße in einem Bereich von ≥ 400µm bis ≤ 10mm, bevorzugt ≥ 600µm bis ≤ 10mm aufweisen, insbesondere ≥ 800µm bis ≤ 10mm. In einer weiteren Ausgestaltung der Erfindung besteht das Trägermaterial aus einer Mischung eines PVC-polymers mit Kreide. Dabei kann der Anteil des PVC-Polymers sowie der Kreideanteil zwischen ≥45 Gew.-% und ≤55 Gew.-% liegen. Desweiteren kann das Trägermaterial zwischen ≥0 Gew.-% und ≤10 Gew.-% weiterer Additive, wie beispielsweise Fließhilfsmittel, Thermostabilisatoren oder UV-Stabilisatoren aufweisen. Die Partikelgröße der Kreide liegt dabei zwischen >0µm und ≤1000µm, beispielsweise zwischen ≥800µm und ≤1000µm mit einer bevorzugten Partikelgrößenverteilung D50 von ≥400µm, beispielsweise von ≥600µm. Insbesondere kann das Trägermaterial dabei Kreide mit einer Partikelgrößenverteilung D10 von ≥400µm, beispielsweise von ≥600µm, aufweisen. Die Partikelgrößenverteilung ist dabei auf den volumetrischen Durchmesser bezogen und bezieht sich auf das Volumen der Partikel. Besonders bevorzugt wird dabei das Trägermaterial als granulierte oder pelletierte vorextrudierte Mischung aus einem PVC-Polymer mit Kreide der angegeben Partikelgrößenverteilung bereitgestellt. Das Granulat und/oder die Pellets können dabei bevorzugt etwa eine Korngröße in einem Bereich von ≥ 400µm bis ≤ 10mm, bevorzugt ≥ 600µm bis ≤ 10mm aufweisen, insbesondere ≥ 800µm bis ≤ 10mm, beispielsweise ≥ 1000µm bis ≤ 10mm.

In einer weiteren Ausgestaltung der Erfindung besteht das Trägermaterial aus einer Mischung eines PVC-Polymers mit Holz. Dabei kann der Anteil des PVC-Polymers sowie der Holzanteil zwischen ≥45 Gew.-% und ≤55 Gew.-% liegen. Desweiteren kann das Trägermaterial zwischen ≥0 Gew.-% und ≤10 Gew.-% weiterer Additive, wie beispielsweise Fließhilfsmittel, Thermostabilisatoren oder UV-Stabilisatoren aufweisen. Die Partikelgröße des Holzes liegt dabei zwischen >0µm und ≤1000µm, beispielsweise zwischen ≥800µm und ≤1000µm mit einer bevorzugten Partikelgrößenverteilung D50 von ≥400µm, beispielsweise von ≥600µm. Insbesondere kann das Trägermaterial dabei Holz eine Partikelgrößenverteilung D10 von ≥400µm, beispielsweise von ≥600µm, aufweisen. Die Partikelgrößenverteilung ist dabei auf den volumetrischen Durchmesser bezogen und bezieht sich auf das Volumen der Partikel. Besonders bevorzugt wird dabei das Trägermaterial als granulierte oder pelletierte vorextrudierte Mischung aus einem PVC-Polymer mit Holzpartikeln der angegeben Partikelgrößenverteilung bereitgestellt. Das Granulat und/oder die Pellets können dabei bevorzugt etwa eine Korngröße in einem Bereich von ≥ 400µm bis ≤ 10mm, bevorzugt ≥ 600µm bis ≤ 10mm aufweisen, insbesondere ≥ 800µm bis ≤ 10mm, beispielsweise ≥ 1000µm bis ≤ 10mm.

Zur Bestimmung der Partikelgrößenverteilung kann auf die allgemein bekannten Verfahren wie beispielsweise die Laserdiffraktometrie zurückgegriffen werden, mit welcher Partikelgrößen im Bereich von einigen Nanometern bis hin zu mehreren Millimetern bestimmt werden können. Mittels dieser Methode lassen sich auch D50 bzw. D10 Werte ermitteln, welche 50% bzw. 10% der gemessenen Partikel kleiner sind als der angegebene Wert.

Gemäß einer weiteren Ausgestaltung kann das Trägermaterial Mikrohohlkugeln aufweisen. Derartige Zusatzstoffe können insbesondere bewirken, dass die Dichte des Trägers und damit des erzeugten Paneels signifikant reduziert werden kann, so dass ein besonders einfacher und kostengünstiger Transport und ferner ein besonders komfortables Verlegen gewährleistet werden kann. Dabei kann insbesondere durch das Einfügen von Mikrohohlkugeln eine Stabilität des erzeugten Paneels gewährleistet werden, welche im Vergleich zu einem Material ohne Mikrohohlkugeln nicht signifikant reduziert ist. Somit ist die Stabilität für einen Großteil der Anwendungen vollkommen ausreichend. Unter Mikrohohlkugeln können dabei insbesondere Gebilde verstanden werden, welche einen hohlen Grundkörper aufweisen und eine Größe beziehungsweise einen maximalen Durchmesser aufweisen, der im Mikrometerbereich liegt. Beispielsweise können verwendbare Hohlkugeln einen Durchmesser aufweisen, welcher im Bereich von ≥ 5µm bis ≤ 100µm, beispielsweise ≥ 20µm bis ≤ 50µm liegt. Als Material der Mikrohohlkugeln kommt grundsätzlich jegliches Material in Betracht, wie beispielsweise Glas oder Keramik. Ferner können aufgrund des Gewichts Kunststoffe, etwa die auch in dem Trägermaterial verwendeten Kunststoffe, beispielsweise PVC, PE oder PP, vorteilhaft sein, wobei diese gegebenenfalls, etwa durch geeignete Zusatzstoffe, an einem Verformen während des Herstellungsverfahrens gehindert werden können.

Gemäß einer weiteren Ausgestaltung können die bandartigen Fördermittel zumindest teilweise strukturiert sein. Durch die Verwendung von strukturierten Fördermitteln kann ein Träger erzeugbar sein, der ebenfalls strukturiert ist und somit etwa Poren aufweisen kann, die etwa ein nachzuempfindendes Naturprodukt wiederspiegeln können. Dadurch kann etwa auf eine weitere Strukturierung in dem nachfolgenden Produktionsprozess des Paneels verzichtet werden, was die nachfolgenden Verfahrensschritte besonders einfach, schnell und kostengünstig gestalten kann. Darüber hinaus kann die Strukturierung beziehungsweise können die Poren in dieser Ausgestaltung in einem Arbeitsschritt mit dem Formen des bandförmigen Trägers realisiert werden, so dass ein weiterer Arbeitsschritt für die Ausbildung der Poren entfallen kann. Weiterhin kann die eingeführte Struktur dadurch, dass sie bereits im Träger und damit im Kern des Paneels vorliegt, auch bei höchster Beanspruchung besonders stabil und langlebig sein. Neben dem Einbringen einer Struktur können die Förderbänder auch eine definierte Rauigkeit aufweisen, da so ein Entlüften bei einem Formen des Trägers verbessert werden kann. Dabei können beispielsweise für das obere und untere Band unterschiedliche Rautiefen verwendet werden, wobei das untere Band eine größere Rautiefe aufweisen kann, als das obere Band beziehungsweise bandartige Fördermittel. Beispielsweise kann das untere Band und/oder kann das obere Band eine Rautiefe in einem Bereich von ≥ 0 bis ≤ 25µm aufweisen.

Gemäß einer weiteren Ausgestaltung kann ein Sensor zum Überprüfen des Anordnens des Trägermaterials zwischen den zwei bandartigen Fördermitteln vorgesehen sein. Insbesondere kann der Sensor das Anordnen des Trägermaterials auf dem unteren Fördermittel detektieren. Beispielsweise kann ein insbesondere auf Röntgenstrahlen basierender Sensor vorgesehen sein, der das Flächengewicht des aufgetragenen Materials und so die Homogenität des aufgetragenen Materials überprüft. Vorzugsweise kann der Sensor eine Rücckopplung zu den Streueinheiten aufweisen, um so unmittelbar auf ein fehlerhaftes Auftragen reagieren zu können. Dabei kann der Sensor durch entsprechende Schutzbleche abgeschirmt sein, um ein ungewolltes Austreten von Röntgenstrahlung zu verhindern. Ferner kann zur Schonung und zur Verlängerung Lebensdauer des Sensors ein Kühlsystem vorgesehen sein.

Gemäß einer weiteren Ausgestaltung kann in den Träger ein Faserwerkstoff eingearbeitet werden. Insbesondere kann der Faserwerkstoff in den Träger bei Verfahrensschritt b) eingearbeitet werden. In dieser Ausgestaltung kann somit etwa ein Faserwerkstoff, insbesondere als Faserwerkstoffbahn, auf einer Rolle aufgewickelt sein und mittels einer Abwickelstation zum Abwickeln des Faserwerkstoffs abgewickelt und zwischen die zwei bandartigen Fördermittel geführt werden, um den Faserwerkstoff einzufügen. Beispielsweise kann in dieser Ausgestaltung ein Glasfaservlies verwendet werden. In dieser Ausgestaltung kann ein Träger mit einer besonders hohen Belastbarkeit beziehungsweise Stabilität erzeugt werden, da die Festigkeit des Trägers durch den eingearbeiteten Faserwerkstoff signifikant erhöht werden kann. Darüber hinaus kann der Träger in dieser Ausgestaltung besonders maßgeschneidert werden, da beispielsweise durch das Vorsehen einer Mehrzahl von Streueinheiten, wie dies vorstehend im Detail erläutert ist, das Trägermaterial beispielsweise oberhalb und unterhalb des Vlies wie gewünscht einstellbar sein kann. Ferner kann eine noch maßschneiderbare Lösung durch das Vorsehen einer Mehrzahl von Faserwerkstoff-bahnen ermöglicht werden, wobei das Trägermaterial wiederum wie gewünscht variierbar beziehungsweise anpassbar sein kann.

Gemäß einer weiteren Ausgestaltung kann in Verfahrensschritt c) ein Temperaturgradient eingestellt werden. Insbesondere kann ein Temperaturgradient entlang einer Förderrichtung des Trägermaterials eingestellt werden. In dieser Ausgestaltung kann dieser Verfahrensschritt ein besonders qualitativ hochwertiges Produkt ermöglichen und ferner eine besonders hohe Liniengeschwindigkeit erlauben. Im Detail kann etwa unter Verwendung eines Temperaturgradienten entlang einer Förderrichtung ein besonders schnelles Aufheizen ermöglicht werden, was eine hohe Liniengeschwindigkeit erlaubt. Dies kann beispielsweise realisierbar sein durch eine vergleichsweise höhere Temperatur in einem in Förderrichtung ersten oder vorderen Bereich. Dabei kann weiterhin eine zu hohe Temperatureinwirkung auf das Trägermaterial verhindert werden, was Beschädigungen verhindern und eine besonders hohe Qualität ermöglichen kann. Darüber hinaus kann etwa ein Entgasen bei einer Erhitzung des Trägermaterials verbessert und beschleunigt werden, was wiederum eine hohe Liniengeschwindigkeit erlaubt und ferner durch das Verhindern von Gaseinschlüssen eine besonders hohe Stabilität und Qualität ermöglichen kann. Dies kann insbesondere durch einen Temperaturgradienten in einer zu der Förderrichtung senkrechten Richtung ermöglicht werden. Im letzteren Fall kann insbesondere der Bereich unterhalb des Trägermaterials höher erhitzt werden, als der Bereich oberhalb des Trägermaterials. Beispielsweise kann hier ein Temperaturgradient in einem Bereich von 50°C vorteilhaft sein.

Gemäß einer weiteren Ausgestaltung kann Verfahrensschritt c) durchgeführt werden unter Verwendung zweier plattenartiger Formeinrichtungen. In dieser Ausgestaltung kann eine besonders lange Bearbeitungsdauer und Formung des Trägers auch bei hohen Liniengeschwindigkeiten erfolgen, was ein besonders definiertes Formen des Trägers ermöglichen kann. Denn insbesondere in dieser Ausgestaltung kann durch eine lange Kontaktzeit des Trägermaterials mit den plattenartigen Formeinrichtungen, welche entsprechend beheizbar sein können, das Trägermaterial auch bei hohen Liniengeschwindigkeiten problemlos auf eine gewünschte und notwendige Temperatur erhitzt werden. Darüber hinaus kann in dieser Ausgestaltung auch das Ausbilden von Temperaturprofilen besonders einfach und effektiv ermöglicht werden.

Gemäß einer weiteren Ausgestaltung kann Verfahrensschritt d) durchgeführt wird unter Verwendung einer S-Walze. Durch das Verwenden einer S-Walze als Komprimierungseinheit kann ein gewünschtes Komprimieren mit einem einfachen und kostengünstigen Mittel definiert auch bei hohen Liniengeschwindigkeiten ermöglicht werden. Um die entsprechende und in Abhängigkeit des gewünschten Ergebnisses geeignete Kraft einstellen zu können, kann die Walze beispielsweise in Richtung auf das durchlaufende Trägermaterial verstellbar sein. Dabei kann die S-Walze beispielsweise nur eine Walze umfassen, welche eine Kraft ausübt nur in Kombination mit einer Gegenkraft durch die Bandspannung der Fördermittel. Alternativ kann eine oder eine Mehrzahl an Gegenwalzen vorgesehen sein, welche die entsprechende Gegenkraft aufbringen. Unter einer S-Walze kann dabei im Sinne der Erfindung eine Walze verstanden werden, welche derart angeordnet ist, dass der Träger sie s-förmig umläuft, wie es für den Fachmann bekannt ist und nachstehend mit Bezug auf die Figuren im Detail beschrieben ist.

Gemäß einer weiteren Ausgestaltung kann der Träger bei Verfahrensschritt e) um einen Faktor von >0% bis ≤ 7%, vorzugsweise >0% bis ≤ 5% komprimiert werden. In dieser Ausgestaltung kann Verfahrensschritt e) somit durch eine geringfügige Komprimierung eine besonders glatte Oberfläche erhalten, da dieser Verfahrensschritt im Wesentlichen auf die Glättung beziehungsweise auf das Einstellen der Oberflächengüte abgestimmt werden kann. Somit kann der gesamte Aufbau der Presse, wie insbesondere der Zweibandpresse, auf ein Glätten ausgerichtet sein und es braucht kein Fokus auf ein übermäßiges Komprimieren gelegt zu werden, was auch bei hohen Durchsätzen ein besonders gutes Oberflächenbild erzeugen kann.

Gemäß einer weiteren Ausgestaltung kann der Träger nach Verfahrens schritt e), insbesondere unmittelbar nach Verfahrens schritt e) und/oder beispielsweise vor dem Aufbringen weiterer Schichten auf den Träger, auf eine Temperatur erhitzt werden, die oberhalb der Kristallisierungstemperatur eines in dem Träger vorliegenden Kunststoffes liegt. Anschließend kann der Träger wiederum unter die Kristallisierungstemperatur, beispielsweise auf Raumtemperatur (22°C), abgekühlt werden. Insbesondere, wenn der Träger nach dem Behandeln des Trägers unter Einwirkung von Druck unter Verwendung einer Zweibandpresse erneut erhitzt wird auf eine Temperatur, die oberhalb der Kristallisierungstemperatur des Kunststoffs des Trägermaterials und gegebenenfalls oberhalb der Kristallisierungstemperatur des Kunststoffs der Folie aus feuchtigkeitshemmendem Material liegt, können die Eigenschaften des Trägers noch weiter verbessert werden. Beispielsweise kann der Träger verbesserte Stabilitätseigenschaften aufweisen, insbesondere hinsichtlich seiner mechanischen und/oder thermischen und/oder chemischen Beständigkeit. Dadurch kann die Qualität des Trägers weiter verbessert werden.

Insbesondere ist diese Ausgestaltung anwendbar bei dem Vorhandensein von teilkristallinen und/oder thermoplastischen Polymeren in dem Trägermaterial beziehungsweise in der Folie, wie etwa von Polyethylen oder Polypropylen. Die Kristallisierungstemperatur ist dabei im Sinne der vorliegenden Erfindung insbesondere die Temperatur, auf welche das Polymer erhitzt werden muss, um anschließend beim Abkühlen Kristalle ausbilden zu können. Insbesondere beginnt die Kristallbildung bei einem Abkühlen des Polymers bei einer Temperatur, die unterhalb der Schmelztemperatur und gegebenenfalls oberhalb der Glasübergangstemperatur liegen kann. Entsprechend kann ein Erhitzen auf eine Temperatur unterhalb der Schmelztemperatur des jeweiligen Kunststoffes oder auf eine Temperatur unterhalb der Schmelztemperatur ausreichen. Für den Fall von linearem Polyethylen (LLDPE) kann beispielsweise ein Erhitzen auf eine Temperatur in einem Bereich von ≥ 100°C bis ≤ 150°C, beispielsweise von 120°C, ausreichend sein. Für den Fall von Polypropylen kann beispielsweise ein Erhitzen auf eine Temperatur in einem Bereich von ≥ 160°C bis ≤ 200°C, beispielsweise von 180°C, ausreichend sein.

Die Dauer des entsprechenden Erhitzens kann somit in für den Fachmann verständlicher Weise abhängen von der Verfahrgeschwindigkeit des Trägers, von seiner Dicke und von der einzustellenden Temperatur.

Hinsichtlich weiterer technischer Merkmale und Vorteile des Verfahrens wird hiermit explizit auf die Beschreibung des Wand- oder Bodenpaneels sowie auf die Figur Bezug genommen.

Weiterhin wird eine Vorrichtung zur Herstellung eines dekorierten Wand- oder Bodenpaneels beschrieben, welche dadurch gekennzeichnet ist, dass die Vorrichtung Mittel zum Durchführen eines wie vorstehend beschrieben ausgestalteten Verfahrens aufweist. Bezüglich des Vorsehens der entsprechenden Mittel und deren Vorteile wird explizit auf die Beschreibung des Verfahrens, des Wand- oder Bodenpaneels sowie auf die Figur Bezug genommen.

Darüber hinaus wird ein Wand- oder Bodenpaneel offenbart, hergestellt gemäß einem vorstehend beschriebenen Verfahren, wobei ein plattenförmiger Träger zumindest in einem Randbereich eine Profilierung aufweist. Bei einer Profilierung im Sinne der Erfindung ist es vorgesehen, dass mittels geeigneter materialabhebender Werkzeuge zumindest in einen Teil der Kanten des Dekorpaneels ein dekoratives und/oder funktionales Profil eingebracht wird. Dabei ist unter einem funktionalen Profil beispielsweise die Einbringung eines Nut- und/oder Federprofils in eine Kante zu verstehen, um Dekorpaneele über die eingebrachten Profilierungen miteinander verbindbar zu gestalten. Ein dekoratives Profil im Sinne der Erfindung ist beispielsweise eine im Kantenbereich des Dekorpaneels eingebrachte Fase, um beispielsweise zwischen zwei miteinander verbundenen Paneelen nach deren Verbindung eine Fuge zu simulieren, wie sie beispielsweise bei sogenannten Landhausdielen auftritt.

Bei einer teilweisen Profilierung des Dekorpaneels werden nicht bereits alle in dem letztendlichen Paneel vorzusehenden Profile eingebracht, sondern nur ein Teil der vorzusehenden Profile, während weitere Profile in einem anschließenden Schritt eingebracht werden. So kann es beispielsweise vorgesehen sein, dass das in einem Paneel vorzusehende dekorative Profil, wie beispielsweise eine Fase, in einem Arbeitsschritt eingebracht wird, während das funktionale Profil, beispielsweise Nut/Feder in einem nachgelagerten Arbeitsschritt eingebracht wird.

Durch eine Aufbringung des Dekors erst nach dem zumindest teilweisen Profilieren des Trägers, etwa durch die vorbeschriebenen Verfahren wie beispielsweise Direktdruckverfahren, wird ein Abtragen oder Beschädigen des Dekors im Zuge der Profilierung in vorteilhafter Weise vermieden. Dadurch entspricht das Dekor auch in den Bereichen der Profilierung in detailgetreuer Weise der gewünschten Imitation beispielsweise eines Naturwerkstoffes.

Um eine besonders detailgetreue Imitierung auch in den profilierten Bereichen vorzusehen kann die für den Druck genutzte Druckvorlage im Bereich der Profilierung des Paneels verzerrungskompensiert werden. Verzerrungskompensation bedeutet dabei im Sinne der Erfindung beispielsweise für den exemplarischen Fall der Aufbringung mit einem Druckverfahren, die durch die Abweichung der Profilierung aus der Oberflächenebene des Trägers, beispielsweise bei einer Fasenflanke, hervorgerufene Verzerrung des Druckbildes durch eine Anpassung der Druckvorlage an die Abweichung kompensiert wird. Dabei kann es beispielsweise vorgesehen sein, dass die Kompensation der Verzerrung mittels Anpassung des Bildpunktabstandes, der Bildpunktgröße und/oder des Farbauftrages in Abhängigkeit des vorgesehenen Kantenprofils des fertiggestellten Dekorpaneels erfolgt. Im Falle der Bedruckung mittels Digitaldruck kann dabei die Ansteuerung des Druckkopfes in Abhängigkeit der zu kompensierenden Verzerrung erfolgen, so dass der Druckkopf beispielsweise über den profilierten Bereich hinaus ausgelenkt wird und eine Anpassung des Farbausstoßes an das Profil erfolgt.

Hierbei ist es beispielsweise möglich, dass vor dem Aufbringen der Dekorschicht des als Großplatte bereitgestellten Trägers die in einem letztendlichen Paneelverbund vorzusehenden Fugen (wie beispielsweise V-Fugen) in den Träger gefräst werden, auf den so profilierten Träger zumindest die Dekorschicht aufgebracht wird und der Träger anschließend zumindest in den profilierten Bereichen zerteilt wird. In Abhängigkeit der Zerteilungsart, wie beispielsweise Sägen, Laser- oder Wasserstrahlschneiden, kann es dabei bevorzugt vorgesehen sein, dass die benötigte Schnittzugabe in dem eingebrachten Profil berücksichtigt wird.

Beispielsweise kann der plattenförmige Träger ein Material aufweisen, das auf einem WPC-Werkstoff oder einem PVC-Werkstoff basiert. Bezüglich der genauen Zusammensetzung und der daraus resultierenden Vorteile wird explizit auf die vorstehende Beschreibung des Verfahrens verwiesen. Beispielsweise kann es vorgesehen sein, dass das Trägermaterial Holz und/oder Kreide mit einer Partikelgröße zwischen ≥0 und ≤1000µm, beispielsweise ≥800 und ≤1000µm und einer Partikelgrößenverteilung D50 von ≥400µm, bevorzugt einer Partikelgrößenverteilung D10 von ≥400µm aufweist, beispielsweise einer Partikelgrößenverteilung D50 von ≥600µm, bevorzugt einer Partikelgrößenverteilung D10 von ≥600µm.

Hinsichtlich weiterer technischer Merkmale und Vorteile des Wand- oder Bodenpaneels wird hiermit explizit auf die Beschreibung des Verfahrens sowie auf die Figur Bezug genommen.

Die Erfindung ist nachfolgend anhand der Figuren sowie eines Ausführungsbeispiels weiter erläutert.
Fig. 1 zeigt schematisch eine erfindungsgemäße Vorrichtung zum Durchführen eines Teils des erfindungsgemäßen Verfahrens; und
Fig. 2 zeigt eine beispielhafte S-Walze zum Durchführen eines Verfahrensschritts des erfindungsgemäßen Verfahrens.

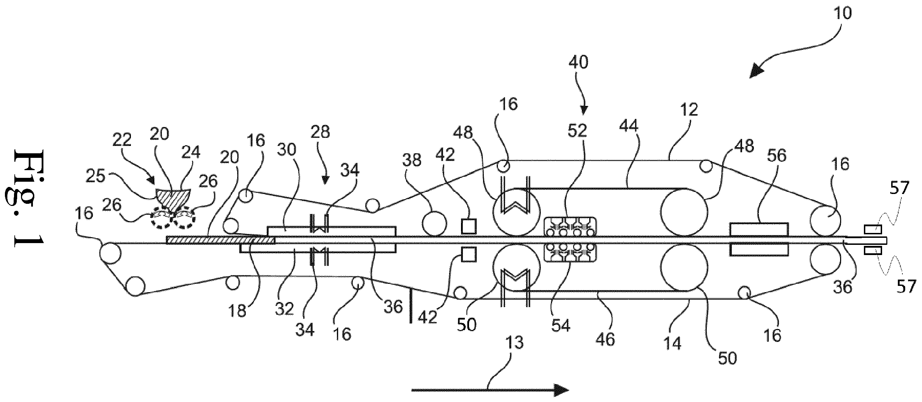

Die Vorrichtung nach Figur 1 ist geeignet für ein Verfahren zur Herstellung eines dekorierten Wand- oder Bodenpaneels. Dabei werden bezüglich Figur 1 insbesondere Bearbeitungsstationen für die folgenden Verfahrensschritte beschrieben:
a) Bereitstellen eines schüttfähigen Trägermaterials, insbesondere eines Granulats,
b) Anordnen des Trägermaterials zwischen zwei bandartigen Fördermitteln,
c) Formen des Trägermaterials unter Einwirkung von Temperatur unter Ausbildung eines bahnförmigen Trägers,
d) Komprimieren des Trägers,
e) Behandeln der Trägermaterialbahn unter Einwirkung von Druck unter Verwendung einer Zweibandpresse, wobei der Träger vor oder in der Zweibandpresse gekühlt wird;
f) gegebenenfalls weiteres Abkühlen des Trägers.

An diese Verfahrensschritte anschließend kann das Verfahren weitere Verfahrensschritte aufweisen, um das fertige Wand- oder Bodenpaneel zu erhalten.

Die Vorrichtung 10 gemäß Figur 1 umfasst zunächst zwei umlaufende bandartige Fördermittel 12, 14, welche insbesondere durch Umlenkrollen 16 derart geführt sind, dass sich zwischen ihnen ein Aufnahmeraum 18 zum Aufnehmen und bearbeiten eines bereitgestellten schüttfähigen, insbesondere granularen Trägermaterials 20, etwa auf Basis eines Kunststoffs, etwa aufweisend PVC, oder eines Holz-Kunststoff-Komposit-Werkstoffes, etwa aufweisend Holz und PP, PE oder ein Blockcopolymer aufweisend PP und PE, ausbildet. Die Fördermittel 12, 14 können zumindest teilweise aus Polytetrafluorethylen ausgestaltet sein, beispielsweise damit beschichtet sein. Weiterhin können die Fördermittel 12, 14 zumindest teilweise, insbesondere auf ihrer dem Aufnahmeraum 18 zugewandten Seite, geraut beziehungsweise strukturiert sein. Ferner können die Fördermittel 12, 14 etwa eine Breite in einem Bereich von etwa 1,5m aufweisen.

Um das Trägermaterial 20 zwischen den bandartigen Fördermitteln 12, 14 beziehungsweise in dem Aufnahmeraum 18 anzuordnen, ist eine Austrageinheit 22 mit einem oder einer Mehrzahl an Austragköpfen 24 vorgesehen, durch welche das Trägermaterial 20 auf dem unteren Fördermittel 14 anordbar ist. Die Austragköpfe 24 können dabei einen Trichter 25 umfassen, der das Trägermaterial 20 auf entsprechende Streuwalzen 26 aufbringt, woraufhin das Trägermaterial 20 auf das untere Fördermittel 14 gestreut werden kann.

Um ein homogenes Auftragen des Trägermaterials 20 auf dem unteren Fördermittel 14 sicherzustellen, kann ein Sensor zum Überprüfen des Anordnens des Trägermaterials 20 zwischen zwei bandartigen Fördermitteln 12, 14 vorgesehen sein. Der Sensor kann insbesondere mit der Austrageinheit 22 gekoppelt sein, um eine potentiell ungenaue Befüllung des Aufnahmeraums 18 unmittelbar zu korrigieren.

Um ein besonders homogenes Verteilen des Trägermaterials 20 zu ermöglichen, können ferner Vibratoren vorgesehen sein. Diese können etwa auf das untere Fördermittel 14 einwirken und dabei beispielsweise unter dem unteren Fördermittel 14 angeordnet sein, so dass das Trägermaterial 20 fein verteilt wird.

Um eine ungewünschte Verunreinigung und eine Beschädigung nachfolgender Bearbeitungsstationen zu verhindern, kann ferner ein Sensor zum Detektieren von Metallen vorgesehen sein, welcher ungewollt eingefügtes Metall detektieren kann.

Weiterhin kann eine Vorrichtung zum Einbringen eines Faserwerkstoffs in den Aufnahmeraum 18 und damit in den Träger vorgesehen sein. Beispielsweise kann der Faserwerkstoff bandartig ausgestaltet sein und von einer Rolle abgewickelt werden. Dabei kann der Faserwerkstoff etwa zwischen zwei Austragköpfen 24 angeordnet sein, um beispielsweise oberhalb und unterhalb des Faserwerkstoffs ein unterschiedliches Material anordnen zu können. Somit kann der Faserwerkstoff beispielsweise derart eingeführt werden, dass oberhalb und unterhalb des Faserwerkstoffs eine gewünschte Menge an Trägermaterial 20 sich befindet.

In der Förderrichtung der Fördermittel 12, 14, welche durch den Pfeil 13 gekennzeichnet ist, ist ferner eine Formeinheit 28 vorgesehen, welche dazu ausgestaltet ist, das Trägermaterial 20 unter Einwirkung von Temperatur beziehungsweise Hitze zum Verschmelzen des Trägermaterials 20 unter Ausbildung eines bahnförmigen Trägers 36 zu formen. Hierzu kann die Formeinheit 28 etwa zwei plattenartige Formeinrichtungen 30, 32 aufweisen, welche durch eine Heizeinrichtung 34, etwa mittels eines Thermoöls, heizbar sind. Dadurch kann das Trägermaterial 20 erhitzt werden, bis es, abhängig etwa von dem Schmelzpunkt des Trägermaterials 20 oder eines Teils desselben, eine Temperatur von beispielhaft und in Abhängigkeit des verwendeten Materials, wie etwa PVC oder einem WPV-Werkstoff, ≥ 180°C bis ≤ 200°C erreicht hat. Hierzu kann die Formeinheit 28 beziehungsweise können die Formeinrichtungen 30, 32 beispielsweise auf eine Temperatur von bis zu 250°C erhitzt werden. Dabei kann beispielsweise eine oder zur Einstellung eines Temperaturgradienten eine Mehrzahl an unabhängig einstellbaren Heizbereichen vorgesehen sein. Beispielsweise können die gesamten Formeinrichtungen 30, 32, welche etwa eine Länge von mehreren Metern aufweisen können, beheizbar sein, oder nur ein Teil derselben kann heizbar sein.

Weiterhin kann die Formeinheit 28 insbesondere einen parallelen Spalt aufweisen, der durch die plattenartige Formeinrichtungen 30, 32 gebildet sein kann. Dabei kann jedoch am Einlauf durch eine konische Form ein Einlaufmaul vorgesehen sein, um einen verbesserten Einlauf des Trägermaterials 20 zu ermöglichen. Die auf das Trägermaterial 20 wirkende Kraft kann dabei in einem Bereich von > 0 kg/m² bis zu ≤ 1kg/m² liegen. Dabei kann insbesondere ein gleichmäßige Druckbeaufschlagung ohne das Vorsehen eines Druckprofils beziehungsweise eines Druckgradienten vorgesehen sein.

In der Figur 1 ist ferner zu erkennen, dass die untere Formeinrichtung 32 länger ist, als die obere Formeinrichtung 30 und ferner vor der oberen beginnt. Dadurch kann erreicht werden, dass eine Bearbeitung erst erfolgt, wenn das Trägermaterial 20 bereits geschmolzen oder zumindest angeschmolzen und zumindest teilweise erweicht ist. Dadurch kann ein besonders definierter Formgebungsprozess ermöglicht werden.

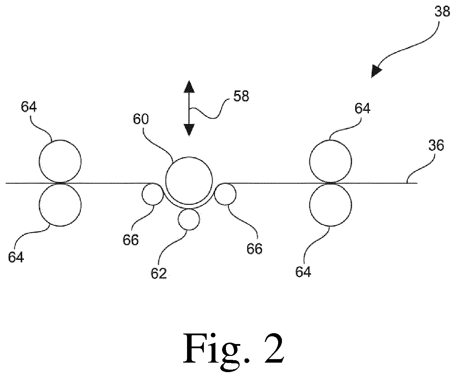

Im weiteren Verlauf in Förderrichtung der Fördereinheiten 12, 14 wird der bandartige Träger 36 durch eine Presseinrichtung 38 geführt. Die Presseinrichtung 38 kann beispielsweise eine S-Walze umfassen, welche im Detail in der Figur 2 gezeigt ist. Die S-Walze kann dabei im Wesentlichen senkrecht zu der Oberfläche des Trägers 36 und damit zu der Verfahrrichtung des Trägers 36 verfahrbar sein, wie dies der Pfeil 58 andeutet, so dass die gewünschten Drücke besonders vorteilhaft einstellbar sein können. Ferner kann die Presseinrichtung 38 beispielsweise auf den Träger 36 einen Druck ausüben, der in einem Bereich von ≥ 1kg/m² bis ≤ 3kg/m² liegen kann. Die S-Walze umfasst dabei eine Hauptwalze 60, welche auf den bahnförmigen Träger 36 einwirkt. Unter Umständen kann dabei die Bandspannung als Gegendruck ausreichen, wobei es jedoch bevorzugt ist, dass wenigstens eine Gegendruckwalze 62 vorgesehen ist. Für ein geeignetes Führen des bahnartigen Trägers 36 können ferner zwei Paare von Kalanderwalzen 64 und gegebenenfalls Umlenkwalzen 66 vorgesehen sein, welche ferner für eine geeignete Bandspannung sorgen können. In der Figur 2 ist dabei zu erkennen, dass der bahnartige Träger 36um die Umlenkwalzen 66 und die Hauptwalze 60 zweifach S-förmig geführt wird, welche Führung den Begriff S-Walze bedingt. Im Detail kann die Hauptwalze 60 durch den bahnförmigen Träger 36 in einem Bereich von ungefähr 50% oder mehr umschlungen sein. Die Temperatur des Trägers 36 entspricht bei einem Einlauf in die Presseinrichtung 38 ferner insbesondere der beim Ausgang aus der Formeinheit 28 vorliegenden Temperatur.

Von der Presseinrichtung 38 wird der Träger 36 im Weiteren zu einer weiteren Presseinrichtung 40 geführt. Um einen etwaigen Wärmeverlust des Trägers 36 ausgleichen oder den Träger 36 bewusst weiter zu erhitzen oder auch, um den Träger 36 aktiv zu kühlen, kann zwischen den Presseinrichtungen 38, 40 eine weitere Temperiereinrichtung 42, wie etwa eine Heizeinrichtung, etwa ein IR-Heizer, oder bevorzugt eine Kühleinrichtung, um den Träger 36 zu kühlen, vorgesehen sein. Dabei kann der Träger 36 auch durch eine Heizeinrichung gekühlt werden, insoweit diese eine Temperatur auf den Träger überträgt, welche unterhalb der vor dem Einlauf in die Temperiereinrichtung 42 vorliegende Trägertemperatur liegt, aber oberhalb der Raumtemperatur.

Zurückkommend zu der Presseinrichtung 40 ist dieses eine Zweibandpresse, welche insbesondere Stahlbänder 44, 46 aufweisen kann, welche etwa auf der dem Träger 36 zugewandten Seite mit Polytetrafluorethylen (Teflon) beschichtet sein können und wobei die Bänder 44, 46 der Zweibandpresse durch Umlenkrollen 48, 50 geführt sein können. Die Umlenkrollen 48, 50 können beispielsweise beheizt oder vorteilhaft gekühlt sein, etwa mittels einer Thermoöltemperierung und/oder die Rollen auf der gleichen Seite des Spalts können etwa einen Abstand in einem Bereich von ≥1m bis ≤ 2m, beispielsweise 1,5m von einander angeordnet sein, wobei die Bänder 44, 46 eine Breite in einem Bereich von etwa 1,5m aufweisen können. Gemäß Figur 1 wird der sich zwischen den Fördermitteln 12, 14 befindliche Träger 20 zwischen die Umlenkrollen 48, 50 und somit zwischen die Bänder 44, 46, wie insbesondere Stahlbänder geführt. Auf der dem Träger 36 gegenüberliegenden Seite der Bänder 44, 46 sind jeweils Press- und/oder Temperiereinrichtungen 52, 54 vorgesehen, mit welchen der Träger 36 gekühlt werden kann. Diese können die Fördereinrichtungen 12, 14 und damit den Träger 36 sowohl abkühlen, als auch geringfügig komprimieren. Hierzu kann etwa eine Luft-Kühlung vorgesehen sein und eine Mehrzahl an Rollen, welche ein intermittierendes Pressen ermöglichen können. Dabei kann eine Temperatur der Bänder 44, 46 eingestellt werden, die in einem Bereich von ≥150°C bis ≤ 180°C, beispielsweise bei 170°C für das obere Band 44 und/oder in einem Bereich von ≥140°C bis ≤ 170°C, beispielsweise bei 160°C für das untere Band 46 eingestellt werden. Dazu können beispielsweise durch die Temperiereinrichtung 52, 54 oder durch eine Mehrzahl an Temperiereinrichtungen Kühlzonen in Bewegungsrichtung des Trägers 36 vorgesehen sein, um einen Temperaturgradienten einzustellen. Beispielsweise kann so ein sukzessives Abkühlen ermöglicht werden. Beispielsweise kann eine erste Kühlzone auf die Bänder 44, 46 wirken, welche in einem Bereich von ≥55°C bis ≤ 85°C, beispielsweise bei 72°C, liegt, und/oder kann eine zweite Kühlzone auf die Bänder 44, 46 wirken, welche in einem Bereich von ≥45°C bis ≤ 75°C, beispielsweise bei 62°C, liegt, und/oder kann eine dritte Kühlzone auf die Bänder 44, 46 wirken, welche in einem Bereich von ≥15°C bis ≤ 45°C, beispielsweise bei 30°C, liegt. Die Temperatur des Trägers in der Presseinrichtung 40 liegt unterhalb der Schmelztemperatur beziehungsweise Erweichungstemperatur des Trägermaterials oder eines Teils desselben. Weiterhin kann ein derartiger Druck auf den Träger 36 einwirken, dass der Träger 36 bei Verfahrensschritt e) um einen Faktor von ≤ 7,5%, vorzugsweise ≤ 5%, beispielsweis in einem Bereich von ≥0,1mm bis ≤ 0,2mm komprimiert wird. Die Temperiereinrichtungen 52, 54 können dabei im Wesentlichen den gesamten Bereich zwischen den Umlenkrollen 48, 50 einnehmen, oder auch nur einen entlang der Förderrichtung begrenzten Bereich.

Die Presseinrichtung 40 kann dabei ein veränderliches Druckprofil aufweisen, etwa in einem Bereich beginnend mit 6mm und endend mit 4,1mm, beispielsweise beginnend mit 5,9mm und endend mit 5,3mm, etwa mit Zwischenstufen von 5,7mm und 5,5mm oder vorteilhaft als isochore Presse ausgestaltet sein.

In der Förderrichtung hinter der Presseinrichtung 40 ist gemäß Figur 1 eine Kühleinrichtung 56 angeordnet, durch welche der Träger auf eine Temperatur abgekühlt werden kann, welche beispielsweise in einem Bereich von ≤ 35°C liegt. Dabei kann die Kühleinrichtung 56 beispielsweise auf einer Wasserkühlung basieren und etwa mehrere Kühlzonen umfassen, um eine definierte Kühlung unter Verwendung genau anpassbarer Kühlprogramme zu ermöglichen. Die Länge der Kühlzone kann dabei der wirksamen Länge der Presseinrichtung 40 entsprechen. Im Anschluss an die Kühleinrichtung 56 kann etwa noch ein weiteres Kühlband vorgesehen sein.

Nach diesen Verfahrens schritten kann der Träger, der etwa eine Enddicke in einem Bereich von ≥ 3mm bis ≤ 5mm, beispielsweise 4,1mm, aufweisen kann, unmittelbar weiterbehandelt werden, oder gelagert werden, etwa als bahnförmiger Träger 36 oder als bereits vereinzelter plattenförmiger Träger.

Weiterhin ist wenigstens eine Heizeinrichtung 57, in der Ausgestaltung gemäß Figur 1 zwei Heizeinrichtungen 57 vorgesehen, durch welche der Träger 36 heizbar ist, und welche bevorzugt in Verfahrrichtung des Trägers bevorzugt hinter der Presseinrichtung 40, insbesondere hinter der Zweibandpresse, angeordnet ist. Hierdurch wird es möglich, dass der Träger 36 nach Verfahrensschritt e) auf eine Temperatur erhitzt wird, die oberhalb der Kristallisierungstemperatur eines in dem Träger 36 vorliegenden Kunststoffs liegt, wobei sich ein Abkühlen anschließen kann, welches etwa unter Verwendung einer weiteren Temperiereinrichtung, beispielsweise Kühleinrichtung, realisierbar sein kann.

An dieser Stelle schließen sich bei dem erfindungsgemäßen Verfahren die weiteren Verfahrensschritte an:
g) gegebenenfalls Aufbringen eines Dekoruntergrunds auf zumindest einen Teilbereich des Trägers 36;
h) Aufbringen eines eine Dekorvorlage nachbildenden Dekors auf zumindest einen Teilbereich des Trägers 36,
i) Aufbringen einer Schutzschicht auf zumindest einen Teilbereich des Dekors,
j) gegebenenfalls Strukturieren der Schutzschicht, und
k) gegebenenfalls Behandeln des Trägers 36 zur elektrostatischen Entladung vor einem der vorgenannten Verfahrensschritte.

### Bezugszeichen:

- 10: Vorrichtung
- 12: bandartiges Fördermittel
- 13: Pfeil
- 14: bandartiges Fördermittel
- 16: Umlenkrolle
- 18: Aufnahmeraum
- 20: Trägermaterial
- 22: Austrageinheit
- 24: Austragkopf
- 25: Trichter
- 26: Streuwalze
- 28: Formeinheit
- 30: Formeinrichtung
- 32: Formeinrichtung
- 34: Heizeinrichtung
- 36: bahnartiger Träger
- 38: Presseinrichtung
- 40: Presseinrichtung
- 42: Temperiereinrichtung
- 44: Stahlbänder
- 46: Stahlbänder
- 48: Umlenkrolle
- 50: Umlenkrolle
- 52: Temperiereinrichtung
- 54: Temperiereinrichtung
- 56: Kühleinrichtung
- 57: Heizeinrichtung
- 58: Pfeil
- 60: Hauptwalze
- 62: Gegendruckwalze
- 64: Kalanderwalze
- 66: Umlenkwalze

## Patentansprüche

1. Verfahren zur Herstellung eines dekorierten Wand- oder Bodenpaneels, aufweisend die Verfahrensschritte:
a) Bereitstellen eines schüttfähigen Trägermaterials (20), insbesondere eines Granulats,
b) Anordnen des Trägermaterials (20) zwischen zwei bandartigen Fördermitteln (12, 14),
c) Formen des Trägermaterials (20) unter Einwirkung von Temperatur unter Ausbildung eines bahnförmigen Trägers (36),
d) Komprimieren des Trägers (36),
e) Behandeln des Trägers (36) unter Einwirkung von Druck unter Verwendung einer Zweibandpresse, wobei der Träger in oder vor der Zweibandpresse auf eine Temperatur unterhalb der Schmelz- beziehungsweise Erweichungstemperatur des Trägermaterials gekühlt wird,
f) gegebenenfalls weiteres Abkühlen des Trägers (36),
g) gegebenenfalls Aufbringen eines Dekoruntergrunds auf zumindest einen Teilbereich des Trägers (36);
h) Aufbringen eines eine Dekorvorlage nachbildenden Dekors auf zumindest einen Teilbereich des Trägers (36),
i) Aufbringen einer Schutzschicht auf zumindest einen Teilbereich des Dekors,
j) gegebenenfalls Strukturieren der Schutzschicht zum Einfügen von Poren und/oder des Randbereichs des Trägers zum Ausbilden von Verbindungselementen, und
k) gegebenenfalls Behandeln des Trägers (36) zur elektrostatischen Entladung vor einem der vorgenannten Verfahrensschritte.

2. Verfahren gemäß Anspruch 1, **dadurch gekennzeichnet, dass** ein Trägermaterial (20) auf Basis eines Kunststoffs oder eines Holz-Kunststoff-Komposit-Werkstoffs bereitgestellt wird.

3. Verfahren gemäß Anspruch 2, **dadurch gekennzeichnet, dass** ein Trägermaterial (20) auf Basis eines WPC-Werkstoffs, insbesondere aufweisend Holz und Polyethylen, Holz und Polypropylen oder Holz und ein Copolymer aus Polyethylen und Polypropylen, oder auf Basis eines PVC-Werkstoffs bereitgestellt wird.

4. Verfahren gemäß Anspruch 2 oder 3, **dadurch gekennzeichnet, dass** der Träger (36) in Verfahrensschritt e) unter den Schmelzpunkt oder den Erweichungspunkt des Kunststoffbestandteils gekühlt wird.

5. Verfahren gemäß einem der vorehrgehenden Ansprüche, **dadurch gekennzeichnet, dass** das Trägermaterial (20) Mikrohohlkugeln aufweist.

6. Verfahren gemäß einem der vorhergehenden Ansprüche, **dadurch gekennzeichnet, dass** die bandartigen Fördermittel (12, 14) zumindest teilweise strukturiert sind.

7. Verfahren gemäß einem der vorhergehenden Ansprüche, **dadurch gekennzeichnet, dass** ein Sensor zum Überprüfen des Anordnens des Trägermaterials (20) zwischen den bandartigen Fördermitteln (12, 14) vorgesehen ist.

8. Verfahren gemäß einem der vorhergehenden Ansprüche, **dadurch gekennzeichnet, dass** in den Träger (36) ein Faserwerkstoff, insbesondere eine Faserwerkstoffbahn, eingearbeitet wird.

9. Verfahren gemäß einem der vorhergehenden Ansprüche, **dadurch gekennzeichnet, dass** in Verfahrensschritt c) oder in Verfahrensschritt e) ein Temperaturgradient eingestellt wird.

10. Verfahren gemäß einem der vorhergehenden Ansprüche, **dadurch gekennzeichnet, dass** Verfahrensschritt c) durchgeführt wird unter Verwendung zweier plattenartiger Formeinrichtungen (30, 32).

11. Verfahren gemäß einem der vorhergehenden Ansprüche, **dadurch gekennzeichnet, dass** Verfahrensschritt d) durchgeführt wird unter Verwendung einer S-Walze.

12. Verfahren nach einem der vorhergehenden Ansprüche, **dadurch gekennzeichnet, dass** die bei Verfahrensschritt e) verwendeten bandartigen Fördermitteln (12, 14) jeweils ein mit Polytetrafluorethylen beschichtetes Stahlband aufweisen.

13. Verfahren nach einem der vorhergehenden Ansprüche, **dadurch gekennzeichnet, dass** der Träger (36) einen Kunststoff aufweist und dass der Träger (36) nach Verfahrensschritt e) auf eine Temperatur erhitzt wird, die oberhalb der Kristallisierungstemperatur des in dem Träger (36) vorliegenden Kunststoffes liegt.

## Claims

1. Method for producing a decorated wall or floor panel, comprising the method steps:
a) providing a pourable carrier material (20), in particular a granulate;
b) placing the carrier material (20) between two belt-like conveying means (12, 14);
c) forming the carrier material (20) under the action of temperature, in order to form a web-shaped carrier (36);
d) compressing the carrier (36);
e) treating the carrier (36) under the action of pressure by use of a twin belt press, wherein the carrier is cooled within or upstream of the twin belt press to a temperature below the melting or softening temperature of the carrier material;
f) optionally further cooling the carrier (36);
g) optionally applying a decorative subsurface onto at least a portion of the carrier (36);
h) applying a decoration reproducing a decorative template onto at least a portion of the carrier (36);
i) applying a protective layer onto at least a portion of the decoration;
j) optionally structuring the protective layer in order to introduce pores and/or the edge region of the carrier in order to form connecting elements; and
k) optionally treating the carrier (36) for electrostatic discharge prior to any of the above steps.

2. Method according to claim 1, **characterized in that** a carrier material (20) on the basis of a plastic or a wood-plastic composite material is provided.

3. Method according to claim 2, **characterized in that** a carrier material (20) based on a WPC material in particular comprising wood and polyethylene, wood and polypropylene or wood and a copolymer of polyethylene and polypropylene or based on a PVC material is provided.

4. Method according to claim 2 or 3, **characterized in that** the carrier (36) is cooled below the melting point or the softening point of the plastic component in method step e).

5. Method according to any one of preceding claims, **characterized in that** the carrier material (20) comprises hollow microspheres.

6. Method according to any one of the preceding claims, **characterized in that** the belt-like conveying means (12, 14) are at least partially structured.

7. Method according to any one of the preceding claims, **characterized in that** a sensor for checking the placement of the carrier material (20) between the belt-like conveying means (12, 14) is provided.

8. Method according to any one of the preceding claims, **characterized in that** a fiber material, in particular a fiber material web, is incorporated in the carrier (36).

9. Method according to any one of the preceding claims, **characterized in that** a temperature gradient is set in method step c) or in method step e).

10. Method according to any one of the preceding claims, **characterized in that** method step c) is carried out by use of two plate-shaped forming means (30, 32).

11. Method according to any one of the preceding claims, **characterized in that** method step d) is carried out by use of a S-roller.

12. Method according to any one of the preceding claims, **characterized in that** the belt-like conveying means (12, 14) used in method step e) each comprise a steel belt coated with polytetrafluorethylene.

13. Method according to any one of the preceding claims, **characterized in that** the carrier (36) comprises a plastic material and the carrier (36) subsequently to method step e) is heated to a temperature above the crystallization temperature of the plastic material present in the carrier (36).

## Revendications

1. Procédé de fabrication d'un panneau mural ou de sol décoré, présentant les étapes de procédé :
a) de fourniture d'un matériau de support (20) apte à être déversé, notamment un granulat,
b) de disposition du matériau de support (20) entre deux moyens de transport de type bandes (12, 14),
c) de moulage du matériau de support (20) moyennant la formation d'un support (36) en forme de bande sous l'effet de la température,
d) de compression du support (36),
e) de traitement du support (36) sous l'effet de la pression moyennant l'emploi d'une presse à deux bandes, où le support est refroidi dans ou avant la presse à deux bandes à une température inférieure à la température de fusion ou de ramollissement du matériau de support,
f) éventuellement, d'un autre refroidissement du support (36),
g) éventuellement, d'une application d'un fond de décor sur au moins une zone partielle du support (36) ;
h) d'application d'un décor reproduisant un modèle de décor sur au moins une zone partielle du support (36),
i) d'application d'une couche de protection sur au moins une zone partielle du décor,
j) éventuellement, de structuration de la couche de protection en vue de l'incorporation de pores et/ou de la zone de bordure du support pour la formation d'éléments de liaison, et
k) éventuellement, de traitement du support (36) pour une décharge électrostatique avant les étapes de procédé précédemment citées.

2. Procédé selon la revendication 1, **caractérisé en ce qu'**un matériau de support (20) à base d'une matière plastique ou d'une matière composite bois-matière plastique est mis à disposition.

3. Procédé selon la revendication 2, **caractérisé en ce qu'**un matériau de support (20) à base d'une matière composite bois-plastique WPC, en particulier, présentant du bois et du polyéthylène, du bois et du polypropylène ou du bois et un copolymère de polyéthylène et de polypropylène, ou à base d'une matière PVC, est mis à disposition.

4. Procédé selon la revendication 2 ou 3, **caractérisé en ce que** le support (36) est refroidi en dessous du point de fusion ou du point de ramollissement du composant plastique dans l'étape de procédé e).

5. Procédé selon l'une des revendications précédentes, **caractérisé en ce que** le matériau de support (20) présente des microbilles creuses.

6. Procédé selon l'une des revendications précédentes, **caractérisé en ce que** les moyens de transport de type bandes (12, 14) sont au moins partiellement structurés.

7. Procédé selon l'une des revendications précédentes, **caractérisé en ce qu'**un capteur est prévu pour la vérification de l'agencement du matériau de support (20) entre les moyens de transport de type bandes (12, 14).

8. Procédé selon l'une des revendications précédentes, **caractérisé en ce qu'**un matériau fibreux, notamment une bande de matière fibreuse, est incorporée dans le support (36).

9. Procédé selon l'une des revendications précédentes, **caractérisé en ce qu'**un gradient de température est réglé dans l'étape de procédé c) ou dans l'étape de procédé e).

10. Procédé selon l'une des revendications précédentes, **caractérisé en ce que** l'étape de procédé c) est effectuée moyennant l'emploi de deux dispositifs de mise en forme (30, 32) de type plaques.

11. Procédé selon l'une des revendications précédentes, **caractérisé en ce que** l'étape de procédé d) est effectuée moyennant l'emploi d'un rouleau S.

12. Procédé selon l'une des revendications précédentes, **caractérisé en ce que**, lors de l'étape de procédé e), des moyens de transport (12, 14) de type bandes utilisés présentent respectivement une bande d'acier revêtue de polytétrafluoroéthylène.

13. Procédé selon l'une des revendications précédentes, **caractérisé en ce que** le support (36) présente une matière plastique et que le support (36), après l'étape de procédé e), est chauffé à une température qui se situe au-dessus de la température de cristallisation de la matière plastique se trouvant dans le support (36).
